# NEW EUROPEAN PATENT SPECIFICATION

(11) **EP 3 370 095 B2**
(45) Date of publication and mention of the opposition decision: **19.08.2026**
(45) Mention of the grant of the patent: 28.08.2019
(21) Application number: 16859840.7
(22) Date of filing: 26.10.2016
(51) Int. Cl.: B42D 25/328, B42D 25/40, B42D 25/351, B42D 25/445, B42D 25/373, B42D 25/324, G02B 5/18, G03H 1/02, G03H 1/00, G03H 1/24, G03H 1/26, G09F 3/02

(54) **DISPLAY BODY**
ANZEIGEELEMENT
CORPS D'AFFICHAGE

(30) Priority: 26.10.2015 JP 2015209778; 26.10.2015 JP 2015209779
(43) Date of publication of application: 05.09.2018
(73) Proprietor: Toppan Printing Co., Ltd., Tokyo 110-0016 (JP)
(72) Inventor: KUBO, Akira, Tokyo 110-0016 (JP); SAWAMURA, Chikara, Tokyo 110-0016 (JP); YASHIKI, Kazuhiro, Tokyo 110-0016 (JP)
(74) Representative: Hoffmann Eitle
(86) International application number: PCT/JP2016/081723
(87) International publication number: WO 2017/073611

(56) References cited:
- EP-A1- 2 077 459
- EP-A1- 2 264 488
- EP-A1- 2 790 042
- WO-A1-2013/084960
- JP-A- 2015 184 532

## Description

### [Technical Field]

The present invention relates to a display member.

### [Background Art]

It is desirable that articles such as securities, certificates, brand-name products, consumable materials and replacement parts for electronic equipment or various types of machinery, and personal identification media be difficult to counterfeit, falsify, or the like. Thus, these articles may support a display member having a good counterfeiting prevention effect.

Many display members which are used for such a purpose include a diffraction structure such as a diffraction grating and a hologram, a scattering structure, or a fine structure such as a lens array. An image which is displayed by the fine structure can change in color or shape, for example, depending on a change in illumination direction or observation direction. The structure of the fine structure is difficult to analyze, and production of the fine structure requires expensive equipment such as an electron beam lithography device. For these reasons, the fine structure is difficult to counterfeit. Thus, a display member including the fine structure is capable of achieving a counterfeiting prevention effect.

As an example of such a display member, JP H8-21909 A describes a recording medium which displays a color image using a diffraction grating. The recording medium includes many pixels, and each of the pixels includes a diffraction grating. In the recording medium, each of the pixels includes a subpixel for a diffraction grating for displaying a red color, a subpixel for a diffraction grating for displaying a green color, and a subpixel for a diffraction grating for displaying a blue color. The recording medium makes it possible to display a color image by setting as appropriate a percentage of an area of the diffraction grating in an area of each of the subpixels. A further example, EP 2 790 042 A1, describes a display member with multiple regions where different regions have different layer properties in order to increase security of the display member. Herein, the display member comprises a plurality of pixels formed by a relief structure, having two or more regions. Some regions have a plurality of recesses so formed as to emit diffracted light having a wavelength corresponding to red under the oblique observation condition.

### [Summary of the Invention]

Even today, a display member which displays an image having photographic quality by a diffraction structure is still difficult to counterfeit. In recent years, however, techniques for creating holograms have become widespread. Thus, even if production of a counterfeit having the same structure as the display member is impossible, an imitation which is capable of giving a similar impression at a glance may be able to be produced. That is, the aforementioned counterfeiting prevention effect of the display member is becoming reduced.

Thus, an object of the present invention is to enable achievement of a strong counterfeiting prevention effect.

### [Brief Description of the Drawings]

An aspect of the present invention provides a display member according to claim 1.

Fig. 1 is a plan view schematically showing a display member in accordance with a first embodiment of the present invention.
Fig. 2 is a cross-sectional view taken along line II-II for the display member shown in Fig. 1.
Fig. 3 is a cross-sectional view taken along line III-III for the display member shown in Fig. 1.
Fig. 4 is a view explaining an angle range for longitudinal directions of grooves or ridges.
Fig. 5A is a cross-sectional view schematically showing an example of a method for producing the display member shown in Figs. 1 to 3.
Fig. 5B is a cross-sectional view schematically showing an example of the method for producing the display member shown in Figs. 1 to 3.
Fig. 5C is a cross-sectional view schematically showing an example of the method for producing the display member shown in Figs. 1 to 3.
Fig. 5D is a cross-sectional view schematically showing an example of the method for producing the display member shown in Figs. 1 to 3.
Fig. 5E is a cross-sectional view schematically showing an example of the method for producing the display member shown in Figs. 1 to 3.
Fig. 6 is a plan view schematically showing the display member in accordance with a second embodiment of the present invention.
Fig. 7 is a plan view schematically showing an example of a pixel which is included in the display member shown in Fig. 6.
Fig. 8 is a plan view schematically showing another example of the pixel which is included in the display member shown in Fig. 6.
Fig. 9 is a plan view schematically showing still another example of the pixel which is included in the display member shown in Fig. 6.
Fig. 10 is a plan view schematically showing an example of a state where the display member shown in Fig. 6 displays a second image.
Fig. 11 is a plan view schematically showing an example of a state where the display member shown in Fig. 6 displays a first image.
Fig. 12 is a plan view schematically showing the display member in accordance with a third embodiment of the present invention.
Fig. 13 is a cross-sectional view taken along line XIII-XIII for the display member shown in Fig. 12.
Fig. 14 is a cross-sectional view taken along line XIV-XIV for the display member shown in Fig. 12.
Fig. 15A is a cross-sectional view schematically showing an example of a method for producing the display member shown in Figs. 12 to 14.
Fig. 15B is a cross-sectional view schematically showing an example of the method for producing the display member shown in Figs. 12 to 14.
Fig. 15C is a cross-sectional view schematically showing an example of the method for producing the display member shown in Figs. 12 to 14.
Fig. 15D is a cross-sectional view schematically showing an example of the method for producing the display member shown in Figs. 12 to 14.
Fig. 15E is a cross-sectional view schematically showing an example of the method for producing the display member shown in Figs. 12 to 14.
Fig. 16 is a plan view schematically showing the display member in accordance with a fourth embodiment of the present invention.
Fig. 17 is a plan view schematically showing an example of a pixel which is included in the display member shown in Fig. 16.
Fig. 18 is a plan view schematically showing a state where the display member shown in Fig. 16 displays the second image.
Fig. 19 is a plan view schematically showing a state where the display member shown in Fig. 16 displays the first image.
Fig. 20 is a plan view schematically showing an example of a structure which is adoptable for a fourth region.
Fig. 21 is a perspective view schematically showing another example of a structure which is adoptable for a second region.
Fig. 22 is a cross-sectional view schematically showing a transfer foil in accordance with an embodiment of the present invention.
Fig. 23 is a plan view schematically showing a labeled article in accordance with an embodiment of the present invention.

### [Description of the Embodiments]

The following description discusses embodiments of the present invention.

An embodiment provides a display member according to claim 1.

In addition to displaying an image using diffracted light, the display member is capable of displaying an image using transmitted light. Thus, the display member is capable of achieving a strong counterfeiting prevention effect.

The plurality of first grooves or ridges contribute to making coverage of the first region with the metal layer smaller. In the display member, therefore, a position of the first region highly accurately coincides with a position of an opening of the metal layer. Thus, the display member is capable of displaying an image with high quality.

The "diffraction structure" means a diffraction grating, a hologram, or a combination thereof. The diffraction structure is designed such that when the diffraction structure is illuminated with white light, first diffracted light exits the diffraction structure in a first observation direction and second diffracted light which differs in wavelength from the first diffracted light exits the diffraction structure in a second observation direction which differs from the first observation direction so that an observer who observes the diffraction structure from the first observation direction and an observer who observes the diffraction structure from the second observation direction perceive different colors.

The "anisotropic light-scattering structure" is a structure which is composed of a plurality of grooves or ridge each of which extends in a longitudinal direction in an angle range of not more than 30°, and preferably in an angle range of not more than 15°, and in which at least one of the longitudinal direction and a pitch of the grooves or ridges is irregular. The anisotropic light-scattering structure is designed as below. That is, when the anisotropic light-scattering structure is illuminated with white light from a first illumination direction that is oblique to a surface on which the anisotropic light-scattering structure is provided and that is perpendicular to an average longitudinal direction of the grooves or ridges, white light exits the anisotropic light-scattering structure as scattered light. Meanwhile, when the anisotropic light-scattering structure is illuminated with white light from a second illumination direction which is a direction having the same angle as the first illumination direction with respect to the surface, among directions which are perpendicular to the surface and are within a plane containing the average longitudinal direction of the grooves or ridges, no scattered light exits the anisotropic light-scattering structure or white light which has low intensity as compared with a case where the anisotropic light-scattering structure is illuminated with white light from the first illumination direction exits the anisotropic light-scattering structure as scattered light.

Another embodiment provides a method for producing a display member, the method including the steps of:
preparing a light transmission layer which has a principal surface on which a plurality of pixels are two-dimensionally arranged, each of the plurality of pixels including one or more selected from the group consisting of:
   a first region which has a plurality of first grooves or ridges each of which extends in a longitudinal direction in a first angle range of -10° to +10° with respect to a first direction which is parallel to the principal surface;
   a second region which has a plurality of second grooves or ridges each of which extends in a longitudinal direction in a second angle range of -65° to +65° with respect to a second direction which is parallel to the principal surface and is perpendicular to the first direction, the plurality of second grooves or ridges being arranged to form a diffraction structure;
   a third region which is flat; and
   a fourth region which has a plurality of third grooves or ridges each of which extends in a longitudinal direction in the second angle range, the plurality of third grooves or ridges being arranged to form an anisotropic light-scattering structure,
one or more of the plurality of pixels including the first region,
one or more of the plurality of pixels including the second region;
forming a first layer as a metal layer on the principal surface;
forming a second layer by depositing a material which is different from a material of the first layer on the first layer by a vapor phase deposition method while conveying the light transmission layer in the first direction, permeability to an etching agent in a position of the first region being higher than permeability to the etching agent in the second to fourth regions; and
selectively removing at least part of a portion of a lamination structure which is composed of the first layer and the second layer, by bringing the etching agent into contact with the second layer, the portion being located on the first region.

The method makes it possible to selectively remove at least part of that portion of the lamination structure composed of the first layer and the second layer which is located on the first region, without a process for patterning the second layer. Thus, the method makes it possible to simply produce the display member.

In the method, the plurality of first grooves or ridges contribute to making the permeability to the etching agent in the position of the first region higher than the permeability to the etching agent in the second to fourth regions. Thus, the method allows the position of the first region to highly accurately coincide with a position of an opening of the first layer. Therefore, the method makes it possible to produce a display member which is capable of displaying an image with high quality.

The present inventors consider that the formation of the second layer in which the permeability to the etching agent in the position of the first region is higher than the permeability to the etching agent in the second to fourth regions is possible for the reason below.

Oblique vapor deposition is used for forming an oriented film of a liquid crystal. For example, when oblique vapor deposition of a material such as silicon oxide is performed on a substrate, the material grows on the substrate to form columns each of which is tilted.

In the method in accordance with the embodiment, the material of the second layer is deposited on the light transmission layer by the vapor phase deposition method while the light transmission layer is being conveyed. For example, the material is deposited on the light transmission layer while the light transmission layer is being moved relative to an evaporation source which supplies a vaporized material. That is, the vaporized material is supplied to the light transmission layer from the oblique direction. Accordingly, this process allows a phenomenon similar to oblique vapor deposition to occur.

When the material of the second layer grows in a columnar shape, growth of the material is prevented in a portion behind the columns. Thus, the second layer obtained in this manner is porous.

However, since the light transmission layer is being moved, a turbulent flow occurs in proximity to a surface of the light transmission layer. Accordingly, a columnar structure is less likely to be formed on a flat region. Thus, a portion of the second layer which is located on the third region is not porous.

When many grooves are provided on the surface of the light transmission layer and longitudinal directions of the grooves intersect at a large angle with a conveying direction in which the light transmission layer is conveyed, the grooves accelerate the occurrence of the turbulent flow in proximity to the surface of the light transmission layer. Thus, portions of the second layer which are located on the second and fourth regions are not porous either.

Meanwhile, when many grooves are provided on the surface and longitudinal directions of the grooves are almost parallel to the conveying direction, the grooves straighten an air current in proximity to the surface. Thus, in a region having such grooves, a columnar structure is more likely to be formed. In addition, deposition of the vaporized material is more likely to occur in proximity to an opening of the grooves than in a position at a bottom of the grooves. That is, the columnar structure is more likely to be formed in proximity to the opening of the grooves than in the position at the bottom of the grooves. When the columnar structure is formed in proximity to the opening of the grooves, deposition of the material at the bottom is extremely less likely to occur. Thus, a portion of the second layer which is located on the first region is porous.

As has been described, on the second to fourth regions, the second layer is densely formed, and on the first region, the second layer is porous. Thus, only in the position of the first region, the etching agent reaches the first layer and etching selectively proceeds.

According to still another embodiment, in one of the embodiments, the light transmission layer is a light transmissive film. The term "film" used here does not include a concept of thickness.

According to still another embodiment, in one of the embodiments, the light transmission layer is made of resin.

According to still another embodiment, in one of the embodiments, the light transmission layer is transparent. Alternatively, according to still another embodiment, in one of the embodiments, the light transmission layer is opaque.

According to still another embodiment, in one of the embodiments, the light transmission layer has a monolayer structure which is composed of a resin layer.

Alternatively, according to still another embodiment, in one of the embodiments, the light transmission layer has a multilayer structure. The light transmission layer having the multilayer structure includes, for example, a base material and a resin layer which is provided on the base material.

The base material is, for example, a plastic film such as a polyethylene terephthalate (PET) film, a polyethylene naphthalate (PEN) film, or a polypropylene (PP) film; paper; synthetic paper; plastic-coated paper; or resin impregnated paper.

The resin layer is made of, for example, thermoplastic resin. Such a resin layer is obtained, for example, in such a manner that a coating film made of thermoplastic resin is formed, a plate (or mold) having convex portions or concave portions corresponding to grooves or ridges is pressed against the coating film while the coating film is being heated, the coating film is cooled in this state, and then the coating film is peeled from the plate. As the thermoplastic resin, for example, acrylic-based resin, epoxy-based resin, cellulose-based resin, and vinyl-based resin, a mixture containing one or more of these resins, or a copolymer containing one or more of these resins can be used.

Alternatively, the resin layer is made of, for example, thermosetting resin. Such a resin layer is obtained, for example, in such a manner that a coating film made of thermosetting resin is formed, the plate is pressed against the coating film and the coating film is heated, and then the coating film is peeled from the plate. As the thermosetting resin, for example, urethane-based resin which is formed by a cross-linking reaction of an isocyanate compound with polyol-based resin such as acrylic polyol resin and polyester polyol resin; melamine-based resin; epoxy-based resin; phenol-based resin; a mixture containing one or more of these resins; or a copolymer containing one or more of these resins can be used.

Alternatively, the resin layer is made of, for example, radiation curable resin. Such a resin layer is obtained, for example, in such a manner that a coating film made of radiation curable resin is formed, the plate is pressed against the coating film and the coating film is irradiated with radiation such as ultraviolet light, and then the coating film is peeled from the plate. Alternatively, such a resin layer is obtained, for example, in such a manner that radiation curable resin is poured between the base material and the plate and then the base material and the plate are pressed against each other, the radiation curable resin is irradiated with radiation, and then the coating film is peeled from the plate.

The radiation curable resin contains, for example, a polymerizable compound and an initiator.

As the polymerizable compound, for example, a photoradical polymerizable compound is used.

As the photoradical polymerizable compound, for example, a monomer, oligomer, or polymer which has an ethylenically unsaturated bond or an ethylenically unsaturated group can be used. Alternatively, as the photoradical polymerizable compound, for example, a monomer such as 1,6-hexanediol, neopentyl glycol diacrylate, trimethylolpropane triacrylate, pentaerythritol acrylate, pentaerythritol tetraacrylate, pentaeythritol pentaacrylate, and dipentaerythritol hexaacrylate; an oligomer such as epoxy acrylate, urethane acrylate, and polyester acrylate; or a polymer such as urethane-modified acrylic resin and epoxy-modified acrylic resin can be used.

When the photoradical polymerizable compound is used as the polymerizable compound, a photoradical polymerization initiator can be used as the initiator.

As the photoradical polymerization initiator, for example, a benzoin-based compound such as benzoin, benzoin methyl ether, and benzoin ethyl ether; an anthraquinone-based compound such as anthraquinone and methyl anthraquinone; a phenyl ketone-based compound such as acetophenone, diethoxyacetophenone, benzophenone, hydroxyacetophenone, 1-hydroxycyclohexyl phenyl ketone, α-aminoacetophenone, and 2-methyl-1-(4-methylthiophenyl)-2-morpholinopropane-1-on; benzil dimethyl ketal; thioxanthone; acylphosphine oxide; or Michler's ketone can be used.

Alternatively, as the polymerizable compound, a photocationic polymerizable compound can be used. As the photocationic polymerizable compound, for example, a monomer, oligomer, or polymer which has an epoxy group, an oxetane skeleton-containing compound, or vinyl ethers can be used.

When the photocationic polymerizable compound is used as the polymerizable compound, a photocationic polymerization initiator can be used as the initiator.

As the photocationic polymerization initiator, for example, an aromatic diazonium salt, an aromatic iodonium salt, an aromatic sulfonium salt, an aromatic phosphonium salt, or a mixed ligand metallic salt can be used.

Alternatively, as the polymerizable compound, a mixture of the photoradical polymerizable compound and the photocationic polymerizable compound can be used.

In this case, as the initiator, for example, a mixture of the photoradical polymerization initiator and the photocationic polymerization initiator is used. Alternatively, in this case, a polymerization initiator which is capable of functioning as an initiator for both of photoradical polymerization and photocationic polymerization can be used.

As such an initiator, for example, an aromatic iodonium salt or an aromatic sulfonium salt can be used.

A percentage of the initiator in the radiation curable resin is, for example, in a range of 0.1 to 15% by mass.

The radiation curable resin does not need to contain the polymerization initiator. In this case, for example, irradiation with an electron beam as radiation makes it possible to cause a polymerization reaction of the polymerizable compound.

The radiation curable resin can further contain an additive such as a sensitizing dye, a dye, a pigment, a polymerization inhibitor, a leveling agent, an antifoaming agent, a drip preventing agent, an adhesion improver, a coating surface modifier, a plasticizer, a nitrogen-containing compound, and epoxy resin, a mold release agent, or a combination thereof.

The radiation curable resin can further contain non-reactive resin in order to improve its formability. As the non-reactive resin, for example, the thermoplastic resin, the thermosetting resin, or the like alone or a mixture thereof can be used.

The resin layer has a thickness of, for example, 0.1 µm to 10 µm. The thickness of the resin layer is not less than a depth or height of grooves or of ridges to be provided on a surface of the resin layer. The thickness is preferably in a range of 1 to 10 times the depth of the grooves or the height of the ridges, and more preferably in a range of 3 to 5 times the depth of the grooves or the height of the ridges. In a case where the resin layer has a large thickness, when the plate is pressed against the resin layer in order to form grooves or ridges, extrusion of resin or wrinkles are more likely to occur. In a case where the resin layer has a small thickness, it is difficult to form grooves or ridges having a desired shape.

The plate is produced, for example, by using an electron beam lithography device or a nanoimprint device. This makes it possible to form the aforementioned convex portions or concave portions with high accuracy. Normally, first, an original plate which has a principal surface on which a relief structure is provided is created, the relief structure of the original plate is transferred to create an inverted plate, and a relief structure of the inverted plate is transferred to create a reproduction plate. The reproduction plate thus obtained is used to form a relief structure on the surface of the resin layer.

According to still another embodiment, in one of the embodiments, the longitudinal directions of the plurality of first grooves or ridges are the same. Alternatively, according to another embodiment, in the embodiment, the longitudinal directions of the plurality of first grooves or ridges vary.

According to still another embodiment, in one of the embodiments, the plurality of first grooves or ridges extend from one end to another end of the first region. Alternatively, according to still another embodiment, in one of the embodiments, the plurality of first grooves or ridges have a discontinuous portion.

According to still another embodiment, in one of the embodiments, a cross section of each of the plurality of first grooves or ridges which is perpendicular to a longitudinal direction of a corresponding one of the plurality of first grooves or ridges has, for example, a tapered shape such as a V-shape or a U-shape. Alternatively, according to still another embodiment, in one of the embodiments, the cross section of each of the plurality of first grooves or ridges which is perpendicular to the longitudinal direction of the corresponding one of the plurality of first grooves or ridges is rectangular.

According to still another embodiment, in one of the embodiments, the distance between centers of the plurality of first grooves or ridges is uniform. Alternatively, according to still another embodiment, in one of the embodiments, the distance between centers of the plurality of first grooves or ridges is not uniform.

According to still another embodiment, in one of the embodiments, the distance between centers of the plurality of first grooves or ridges is in a range of 100 nm to 3000 nm, and preferably in a range of 300 nm to 1500 nm.

According to still another embodiment, in one of the embodiments, a depth or height of the plurality of first grooves or ridges is in a range of 20 nm to 1500 nm, and preferably in a range of 50 nm to 800 nm.

According to still another embodiment, in one of the embodiments, an average value of a ratio of the depth or height of the plurality of first grooves or ridges to the distance between centers of the plurality of first grooves or ridges is not more than 3.0, and preferably not more than 1.0.

According to still another embodiment, in one of the embodiments, the average value of the ratio of the depth or height of the plurality of first grooves or ridges to the distance between centers of the plurality of first grooves or ridges is not less than 0.05, and preferably not less than 0.15.

According to the invention, the first region has no grooves or ridges which extend in a longitudinal direction outside the first angle range.

According to still another embodiment, in one of the embodiments, the longitudinal directions of the plurality of second grooves or ridges are the same.

According to still another embodiment, in one of the embodiments, the second region includes a plurality of subregions, and the longitudinal directions of the plurality of second grooves or ridges are the same within each of the subregions and the longitudinal directions of the plurality of second grooves or ridges are different between the subregions.

According to still another embodiment, in one of the embodiments, the plurality of second grooves or ridges extend from one end to another end of the second region or the subregion. Alternatively, according to still another embodiment, in one of the embodiments, the plurality of second grooves or ridges have a discontinuous portion.

According to still another embodiment, in one of the embodiments, a cross section of each of the plurality of second grooves or ridges which is perpendicular to a longitudinal direction of a corresponding one of the plurality of second grooves or ridges has, for example, a tapered shape such as a V-shape or a U-shape. Alternatively, according to still another embodiment, in one of the embodiments, the cross section of each of the plurality of second grooves or ridges which is perpendicular to the longitudinal direction of the corresponding one of the plurality of second grooves or ridges is rectangular.

According to still another embodiment, in one of the embodiments, the distance between centers of the plurality of second grooves or ridges is uniform.

According to still another embodiment, in one of the embodiments, the distance between centers of the plurality of second grooves or ridges is in a range of 100 nm to 3000 nm, and preferably in a range of 300 nm to 1500 nm.

According to still another embodiment, in one of the embodiments, a depth or height of the plurality of second grooves or ridges is in a range of 20 nm to 1500 nm, and preferably in a range of 50 nm to 800 nm.

According to still another embodiment, in one of the embodiments, an average value of a ratio of the depth or height of the plurality of second grooves or ridges to the distance between centers of the plurality of second grooves or ridges is not more than 1.0, and preferably not more than 0.5.

According to still another embodiment, in one of the embodiments, the average value of the ratio of the depth or height of the plurality of second grooves or ridges to the distance between centers of the plurality of second grooves or ridges is not less than 0.1, and preferably not less than 0.05.

According to still another embodiment, in one of the embodiments, the second region has no grooves or ridges which intersect with the plurality of second grooves or ridges. Alternatively, according to still another embodiment, in one of the embodiments, the second region has a groove or ridge which intersects with the plurality of second grooves or ridges.

According to still another embodiment, in one of the embodiments, the longitudinal directions of the plurality of third grooves or ridges are the same and the distance between centers of the plurality of third grooves or ridges is not uniform. Alternatively, according to still another embodiment, in one of the embodiments, the longitudinal directions of the plurality of third grooves or ridges are not uniform.

According to still another embodiment, in one of the embodiments, the fourth region includes a plurality of subregions, and average longitudinal directions of the plurality of third grooves or ridges are the same within each of the subregions and the average longitudinal directions of the plurality of third grooves or ridges are different between the subregions.

According to still another embodiment, in one of the embodiments, the plurality of third grooves or ridges extend from one end to another end of the fourth region or the subregion. Alternatively, according to still another embodiment, in one of the embodiments, the plurality of third grooves or ridges have a discontinuous portion.

According to still another embodiment, in one of the embodiments, a cross section of each of the plurality of fourth grooves or ridges which is perpendicular to a longitudinal direction of a corresponding one of the plurality of fourth grooves or ridges has, for example, a tapered shape such as a V-shape or a U-shape. Alternatively, according to still another embodiment, in one of the embodiments, the cross section of each of the plurality of fourth grooves or ridges which is perpendicular to the longitudinal direction of the corresponding one of the plurality of fourth grooves or ridges is rectangular.

According to still another embodiment, in one of the embodiments, the distance between centers of the plurality of fourth grooves or ridges is in a range of 100 nm to 3000 nm, and preferably in a range of 300 nm to 1500 nm.

According to still another embodiment, in one of the embodiments, a depth or height of the plurality of fourth grooves or ridges is in a range of 20 nm to 1500 nm, and preferably in a range of 50 nm to 800 nm.

According to still another embodiment, in one of the embodiments, an average value of a ratio of the depth or height of the plurality of fourth grooves or ridges to the distance between centers of the plurality of fourth grooves or ridges is not more than 1.0, and preferably not more than 0.5.

According to still another embodiment, in one of the embodiments, the average value of the ratio of the depth or height of the plurality of fourth grooves or ridges to the distance between centers of the plurality of fourth grooves or ridges is not less than 0.05, and preferably not less than 0.15.

According to another embodiment, in one of the embodiments, one or more of the plurality of pixels include at least one of the third region and the fourth region; and the remaining one or more of the plurality of pixels include neither the third region nor the fourth region. Such a structure is suitable for adjusting a shape of the first image by using at least one of the third region and the fourth region.

According to still another embodiment, in one of the embodiments, two or more of the plurality of pixels include the first region; and each of the two or more of the plurality of pixels has a different percentage of an area of the first region in an area of a corresponding one of the two or more of the plurality of pixels. Such a structure allows the first image to be a gray-scale image.

According to still another embodiment, in one of the embodiments, two or more of the plurality of pixels include the first region, at least one of the third region and the fourth region, and optionally, the second region; each of the two or more of the plurality of pixels has a different percentage of an area of the first region in an area of a corresponding one of the two or more of the plurality of pixels; and each of the two or more of the plurality of pixels has a different percentage of a total area of the third region and the fourth region in an area of a corresponding one of the two or more of the plurality of pixels. Such a structure is suitable for adjusting gradation of the first image by using at least one of the third region and the fourth region.

According to still another embodiment, in one of the embodiments, two or more of the plurality of pixels include the second region; and each of the two or more of the plurality of pixels has a different percentage of an area of the second region in an area of a corresponding one of the two or more of the plurality of pixels. Such a structure allows the second image to be a gray-scale image.

According to still another embodiment, in one of the embodiments, two or more of the plurality of pixels include the second region, at least one of the third region and the fourth region, and optionally, the first region; each of the two or more of the plurality of pixels has a different percentage of an area of the second region in an area of a corresponding one of the two or more of the plurality of pixels; and each of the two or more of the plurality of pixels has a different percentage of a total area of the third region and the fourth region in an area of a corresponding one of the two or more of the plurality of pixels. Such a structure is suitable for adjusting gradation of the second image by using at least one of the third region and the fourth region.

According to still another embodiment, in one of the embodiments, a negative image of the first image is equal to a monochrome image of the second image. The display member which displays these images allows, for example, brightness inversion and multicoloration (or coloration) or monocoloration (or decoloration) to simultaneously occur without a change in shape of the image, when the display image is switched between the first image and the second image.

Alternatively, according to still another embodiment, in one of the embodiments, a negative image of the first image differs from a monochrome image of the second image. The display member which displays these images allows, for example, a change in shape of the image and multicoloration (or coloration) or monocoloration (or decoloration) to simultaneously occur, when the display image is switched between the first image and the second image.

According to still another embodiment, in one of the embodiments, one or more of the plurality of pixels include the third region; one or more of the plurality of pixels include the fourth region; and a third pattern which is formed by an array of the one or more of the plurality of pixels including the third region differs from a fourth pattern which is formed by an array of the one or more of the plurality of pixels including the fourth region. The display member having such a structure is capable of displaying an image having a shape different from that of the first image, when the anisotropic light-scattering structure is irradiated with white light and scattered light which exits the anisotropic light-scattering structure is observed.

According to still another embodiment, in one of the embodiments, one or more of the plurality of pixels include the fourth region, the longitudinal directions of the plurality of third grooves or ridges and the longitudinal directions of the plurality of second grooves or ridges form an angle in a range of 5 to 60°, and preferably in a range of 15 to 50°. According to the display member having such a structure, an image which is displayed by scattered light which exits the anisotropic light-scattering structure does not prevent the second image from being displayed, and vice versa.

Alternatively, according to still another embodiment, in one of the embodiments, one or more of the plurality of pixels include the fourth region, the longitudinal directions of the plurality of third grooves or ridges and the longitudinal directions of the plurality of second grooves or ridges form an angle in a range of 0 to 30°, and preferably in a range of 0 to 15°. The display member having such a structure is capable of displaying the second image by a combination of diffracted light and scattered light.

According to still another embodiment, in one of the embodiments, each of the plurality of pixels has a maximum size in a range of 5 to 5000 µm, and preferably in a range of 20 µm to 1000 µm. The display member having such a structure is particularly suitable for displaying an image having photographic quality.

According to still another embodiment, in one of the embodiments, each of the first to fourth regions included in the plurality of pixels has a maximum size in a range of 1 to 3000 µm, and preferably in a range of 5 µm to 500 µm. The display member having such a structure is also particularly suitable for displaying an image having photographic quality.

According to still another embodiment, in one of the embodiments, each of the plurality of pixels includes first to third subpixels; each of the first to third subpixels includes one or more of the first to fourth regions; in one or more of the plurality of pixels, the first subpixel includes the second region; in one or more of the plurality of pixels, the second subpixel includes the second region; in one or more of the plurality of pixels, the third subpixel includes the second region; in each of the one or more of the plurality of pixels in which the first subpixel includes the second region, under a condition where the display member is illuminated with white light and diffracted light is observed, red diffracted light exits a portion of the diffraction structure which is located on the first subpixel; in each of the one or more of the plurality of pixels in which the second subpixel includes the second region, under the condition, green diffracted light exits a portion of the diffraction structure which is located on the second subpixel; and in each of the one or more of the plurality of pixels in which the third subpixel includes the second region, under the condition, blue diffracted light exits a portion of the diffraction structure which is located on the third subpixel.

The display member is capable of displaying a color image as the second image. The display member allows, for example, brightness inversion and multicoloration (or coloration) or monocoloration (or decoloration) to simultaneously occur without a change in shape of the image, when the display image is switched between the first image and the second image.

According to still another embodiment, in one of the embodiments, each of the plurality of pixels includes a first subpixel and a second subpixel; in one or more of the plurality of pixels, the first subpixel includes the first region, and optionally, at least one of the third region and the fourth region, and in the remaining one or more of the plurality of pixels, the first subpixel includes at least one of the third region and the fourth region, and optionally, the first region; and in one or more of the plurality of pixels, the second subpixel includes the second region, and optionally, at least one of the third region and the fourth region, and in the remaining one or more of the plurality of pixels, the second subpixel includes at least one of the third region and the fourth region, and optionally, the second region.

The display member allows, for example, a change in shape of the image and multicoloration (or coloration) or monocoloration (or decoloration) to simultaneously occur, when the display image is switched between the first image and the second image.

Alternatively, according to still another embodiment, in one of the embodiments, each of the plurality of pixels includes first to fourth subpixels; the first subpixel includes at least one of the first region, the third region, and the fourth region; each of the second to fourth subpixels includes at least one of the second to fourth regions; in one or more of the plurality of pixels, the second subpixel includes the second region; in one or more of the plurality of pixels, the third subpixel includes the second region; in one or more of the plurality of pixels, the fourth subpixel includes the second region; in each of the one or more of the plurality of pixels in which the second subpixel includes the second region, under a condition where the display member is illuminated with white light and diffracted light is observed, red diffracted light exits a portion of the diffraction structure which is located on the second subpixel; in each of the one or more of the plurality of pixels in which the third subpixel includes the second region, under the condition, green diffracted light exits a portion of the diffraction structure which is located on the third subpixel; and in each of the one or more of the plurality of pixels in which the fourth subpixel includes the second region, under the condition, blue diffracted light exits a portion of the diffraction structure which is located on the fourth subpixel.

The display member is capable of displaying a color image as the second image. The display member allows, for example, a change in shape of the image and multicoloration (or coloration) or monocoloration (or decoloration) to simultaneously occur, when the display image is switched between the first image and the second image.

According to still another embodiment, in one of the embodiments, the metal layer does not cover the first region and covers the second region, and also covers the third region and the fourth region when the third region and the fourth region are present. Alternatively, according to still another embodiment, in one of the embodiments, the metal layer partially covers the first region and covers the second region, and also covers the third region and the fourth region when the third region and the fourth region are present.

According to still another embodiment, in one of the embodiments, the metal layer is a light-shielding reflection layer.

According to still another embodiment, in one of the embodiments, the metal layer is made of a single metal such as aluminum, tin, chromium, nickel, copper, gold, and silver or an alloy containing one or more of these metals. The metal layer is preferably made of aluminum or an aluminum alloy.

According to still another embodiment, in one of the embodiments, the metal layer has a thickness in a range of 10 nm to 3000 nm, and preferably in a range of 30 nm to 1000 nm.

According to still another embodiment, in one of the embodiments, the formation of the first layer as the metal layer is performed by an application method such as a spray method or the vapor phase deposition method. The vapor phase deposition method can be a physical vapor deposition (PVD) method such as a vacuum deposition method or a sputtering method or can be a chemical vapor deposition (CVD) method. The formation of the metal layer is preferably performed by a PVD method or a CVD method, and more preferably by the vacuum deposition method.

According to still another embodiment, in one of the embodiments, the formation of the first layer is performed while the light transmission layer is being conveyed in the first direction. This makes it easier to remove the portion of the lamination structure composed of the first and second layers which is located on the first region.

According to still another embodiment, in one of the embodiments, the second layer is made of silicon oxide (SiOₓ; 1 < x < 2). The silicon oxide has high resistance to an acidic or alkaline solution. When the silicon oxide is used as the material of the second layer and the material of the second layer is deposited on the first layer by the vapor phase deposition method while the light transmission layer is being conveyed in the first direction, it is possible to relatively easily form the second layer in which the permeability to the etching agent in the position of the first region is higher than the permeability to the etching agent in the second to fourth regions.

According to still another embodiment, in one of the embodiments, in the portion located on the first region, the second layer which has not yet been brought into contact with the etching agent is a porous layer, for example, a layer which is composed of a plurality of columnar bodies tilted in a single direction or a layer having a cavity, and in the portions located on the second to fourth regions, the second layer which has not yet been brought into contact with the etching agent is a continuous film.

According to still another embodiment, in one of the embodiments, the formation of the second layer is performed with respect to the light transmission layer on a roll. According to an example, the roll has a diameter in a range of 300 mm to 1000 mm. When the formation of the second layer is performed with respect to the light transmission layer on the roll by vacuum deposition, a distance from the evaporation source to the roll is, for example, in a range of 0.5 m to 1.5 m.

According to still another embodiment, in one of the embodiments, in production of the display member, the light transmission layer is conveyed at a speed of 50 m/minute to 300 m/minute, and preferably at a speed of 100 m/minute to 300 m/minute.

According to still another embodiment, in one of the embodiments, an etching solution is used as the etching agent. The etching solution is, for example, an alkaline solution such as a sodium hydroxide solution, a sodium carbonate solution, or a potassium hydroxide solution or an acidic solution such as hydrochloric acid, nitric acid, sulfuric acid, or acetic acid.

According to still another embodiment, in one of the embodiments, the etching agent is an aqueous sodium hydroxide solution containing sodium hydroxide at a mass concentration of 0.5 to 2%.

According to still another embodiment, in one of the embodiments, the etching is performed by immersing the light transmission layer including the first and second layers into the etching solution at 30°C to 50°C for 30 seconds to 5 minutes.

According to still another embodiment, in one of the embodiments, the etching is performed while the light transmission layer is being conveyed in the first direction in the etching solution. This makes it easier to remove the portion of the lamination structure composed of the first and second layers which is located on the first region.

According to still another embodiment, in one of the embodiments, after at least part of the portion of the lamination structure composed of the first and second layers which is located on the first region is removed, the remaining portion of the second layer is removed. Alternatively, the remaining portion of the second layer is not removed.

According to still another embodiment, the display member in accordance with one of the embodiments is used as thread, tear tape, or a part thereof.

According to still another embodiment, the display member in accordance with one of the embodiments is used for the purpose of preventing counterfeiting. Alternatively, according to still another embodiment, the display member in accordance with one of the embodiments is used for a purpose other than prevention of counterfeiting, for example, as toys, learning materials, decorations, or a part thereof, or for the purpose of sales promotion.

Still another embodiment provides a sticky label which includes the display member in accordance with one of the embodiments and a sticky layer provided on the display member.

Still another embodiment provides a transfer foil including: the display member in accordance with one of the embodiments; and a support which supports the display member so that the display member is peelable.

The support is, for example, a film or sheet made of resin. The resin is, for example, polyethylene terephthalate (PET), polyethylene naphthalate (PEN), polyimide (PI), polyethylene (PE), polypropylene (PP), or vinyl chloride.

The transfer foil can further include a peeling layer between the support and the display member. The peeling layer plays a role in facilitating peeling of the display member from the support when the display member is transferred to an object to which the display member is to be transferred. As a material of the peeling layer, for example, resin can be used. The peeling layer can further include an additive such as paraffin wax, carnauba wax, polyethylene wax, or silicone. The peeling layer has a thickness of, for example, not more than 5 µm.

The transfer foil can further include an adhesive layer on the display member. As a material of the adhesive layer, for example, an adhesive such as a reaction curing adhesive, a solvent vaporization adhesive, a hot melt adhesive, an electron beam curing adhesive, and a heat sensitive adhesive can be used.

As the reaction curing adhesive, for example, polyurethane-based resin such as polyester urethane, polyether urethane, and acrylic urethane, epoxy resin, or the like can be used.

As the solvent vaporization adhesive, for example, an aqueous emulsion adhesive containing vinyl acetate resin, acrylic acid ester copolymer resin, ethylene-vinyl acetate copolymer resin, ionomer resin, urethane resin, or the like or a latex adhesive containing natural rubber, styrene-butadiene copolymer resin, acrylonitrile-butadiene copolymer resin, or the like can be used.

As the hot melt adhesive, for example, a hot melt adhesive containing, as a base resin, ethylene-vinyl acetate copolymer resin, ethylene-ethyl acrylate copolymer resin, polyester resin, polycarbonate resin, polyvinyl ether resin, polyurethane resin, or the like can be used.

As the electron beam curing adhesive, for example, an electron beam curing adhesive containing, as a principal ingredient, an oligomer having one or more vinyl functional groups such as an acryloyl group, an allyl group, and a vinyl group can be used. For example, a mixture of an adhesion imparting agent and one or more of polyester acrylate, polyester methacrylate, epoxy acrylate, epoxy methacrylate, urethane acrylate, urethane methacrylate, polyether acrylate, and polyether methacrylate can be used.
As the adhesion imparting agent, for example, a phosphorus-containing acrylate or a derivative thereof, or carboxy-containing acrylate or a derivative thereof can be used.

As the heat sensitive adhesive, for example, polyester resin, acrylic resin, vinyl chloride resin, polyamide resin, polyvinyl acetate resin, rubber-based resin, ethylene-vinyl acetate copolymer resin, or vinyl chloride-vinyl acetate copolymer resin can be used.

Still another embodiment provides a labeled article including: the display member in accordance with one of the embodiments; and an article which supports the display member.

Examples of the article which supports the display member include cards such as integrated circuit (IC) cards and identification (ID) cards, booklets such as passports and bank books, certificates, securities, artwork, craftwork, or industrial products such as electronic components and electronic equipment. The display member can be a part of an article which is to be confirmed to be a genuine article or a tag which is to be attached to the article. The article which supports the display member can be a package for storing the article which is to be confirmed to be a genuine article.

When the article which supports the display member includes paper, the display member can be affixed to a surface of the paper, or the display member can be mixed into the paper and the paper is provided with an opening at a position corresponding to the display member.

The following description discusses embodiments in detail with reference to the drawings. Note that components which have the same or similar functions are given the same reference numerals throughout all the drawings, and duplicate description is omitted.

First, a first embodiment of the present invention is described. The first embodiment is an embodiment obtained by further specifying one of the embodiments which are described without referring to the drawings.

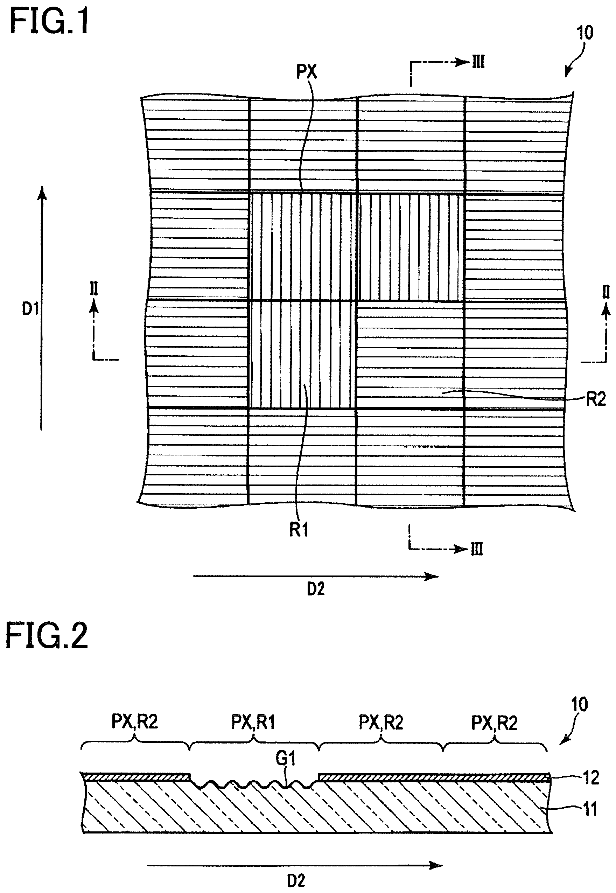

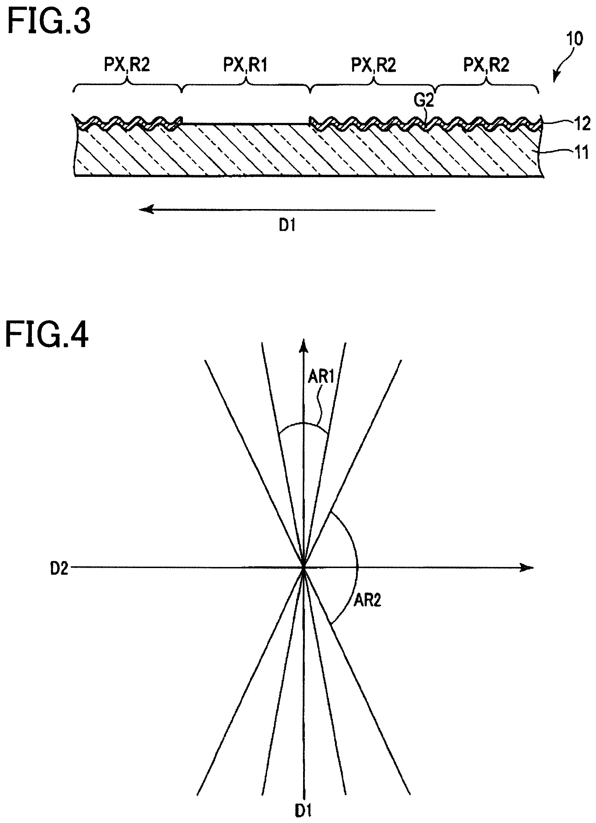

Fig. 1 is a plan view schematically showing a display member in accordance with the first embodiment of the present invention. Fig. 2 is a cross-sectional view taken along line II-II for the display member shown in Fig. 1. Fig. 3 is a cross-sectional view taken along line III-III for the display member shown in Fig. 1.

As shown in Figs. 2 and 3, a display member 10 shown in Figs. 1 to 3 includes a light transmission layer 11 and a metal layer 12.

As shown in Figs. 1 to 3, a plurality of pixels PX which are two-dimensionally arranged are provided on a principal surface of the light transmission layer 11. The pixels PX are arranged in two arrangement directions which are orthogonal to each other. One of the arrangement directions is parallel to a first direction D1, and the other one of the arrangement directions is parallel to a second direction D2. The arrangement directions of the pixels PX can be oblique to each other. At least one of the arrangement directions of the pixels PX can be oblique to the first direction D1 or the second direction. The first direction D1 is a conveying direction in which the light transmission layer 11 is conveyed in production of the display member 10. The second direction D2 is a direction which is parallel to the principal surface of the light transmission layer and is perpendicular to the first direction D1.

Each of the pixels PX includes one of a first region R1 and a second region R2. One or more of the pixels PX include the first region R1. One or more of the pixels PX include the second region R2.

As shown in Figs. 1 and 2, the first region R1 has a plurality of first grooves G1 which extend in longitudinal directions parallel to the first direction D1 and are arranged in the second direction D2. Although Figs. 1 and 2 show the structure having the first grooves G1, instead of the plurality of first grooves G1, the first region R1 can have a plurality of first ridges which extend in longitudinal directions parallel to the first direction D1 and are arranged in the second direction D2. Alternatively, in addition to the plurality of first grooves G1, the first region R1 can have the plurality of first ridges.

As shown in Figs. 1 and 3, the second region R2 has a plurality of second grooves G2 which extend in longitudinal directions parallel to the second direction D2 and are arranged in the first direction D1. Although Figs. 1 and 3 show the structure having the second grooves G2, instead of the plurality of second grooves G2, the second region R2 can have a plurality of second ridges which extend in longitudinal directions parallel to the second direction D2 and are arranged in the first direction D1. Alternatively, in addition to the plurality of second grooves G2, the second region R2 can have the plurality of second ridges.

The metal layer 12 does not cover the first region R1 and covers the second region R2 in the principal surface of the light transmission layer 11. The second grooves G2 form a diffraction structure on an interface between the light transmission layer 11 and the metal layer 12 and on a surface of the metal layer 12.

When the display member 10 is illuminated with white light and transmitted light is observed, the display member 10 displays a first image corresponding to distribution of the first region R1. When the display member 10 is illuminated with white light and diffracted light which exits the diffraction structure is observed, the display member 10 displays a second image. A negative image of the first image is equal to a monochrome image of the second image. Thus, the display member 10 allows brightness inversion and coloration or decoloration to simultaneously occur without a change in shape of the image, when a display image is switched between the first image and the second image.

In the display member 10, although the longitudinal directions of the first grooves G1 are parallel to the first direction D1, the longitudinal directions of the first grooves G1 do not need to be parallel to the first direction D1. In the display member 10, although the longitudinal directions of the second grooves G2 are parallel to the second direction D2, the longitudinal directions of the second grooves G2 do not need to be parallel to the second direction D2.

Fig. 4 is a view for explaining an angle range for the longitudinal directions of the grooves or ridges. In Fig. 4, reference signs AR1 and AR2 indicate first and second angle ranges, respectively. The first angle range AR1 is an angle range from -10° to +10° with respect to the first direction D1. The second angle range AR2 is an angle range from -65° to +65° with respect to the second direction D2.

The longitudinal directions of the first grooves G1 described with reference to Figs. 1 to 3 can be the same or different within the first angle range AR1 in each of the pixels PX including the first grooves G1. The longitudinal directions of the first grooves G1 can be the same or different within the first angle range AR1 between the pixels PX including the first grooves G1.

The longitudinal directions of the second grooves G2 can be the same or different within the second angle range AR2 between the pixels PX including the second grooves G2.

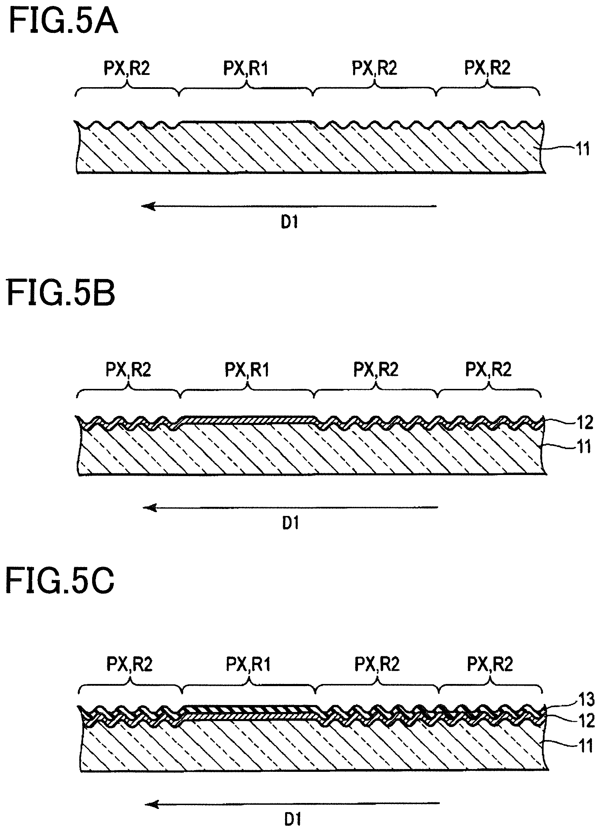

Figs. 5A to 5E are each a cross-sectional view schematically showing an example of a method for producing the display member shown in Figs. 1 to 3.

In the method, first, the light transmission layer 11 shown in Fig. 5A is prepared. The pixels PX each of which includes one of the first region R1 and the second region R2 are provided on the principal surface of the light transmission layer 11.

Next, while the light transmission layer 11 is being conveyed in the first direction D1, as shown in Fig. 5B, the metal layer 12 is formed as a first layer on the principal surface. The metal layer 12 is preferably formed by a vapor phase deposition method, and more preferably by a vacuum deposition method. The metal layer 12 is formed so that a surface of the metal layer 12 has a relief structure similar to a relief structure provided on the principal surface. As an example, the following describes a case where the metal layer 12 made of aluminum is formed by a vacuum deposition method.

Next, while the light transmission layer 11 is being conveyed in the first direction D1, as shown in Fig. 5C, a second layer 13 is formed on the metal layer 12. The second layer 13 is formed by a vapor phase deposition method, and preferably by a vacuum deposition method. The second layer 13 is formed so that permeability to an etching agent in a position of the first region R1 is higher than permeability to the etching agent in the second region R2. As an example, the following describes a case where the second layer 13 made of silicon oxide is formed by a vacuum deposition method. Furthermore, as an example, the following describes a case where, in a portion located on the first region R1, the second layer 13 is a layer which is composed of a plurality of columnar bodies tilted in a single direction or a layer having a cavity and, in a portion located on the second region R2, the second layer 13 is a continuous film.

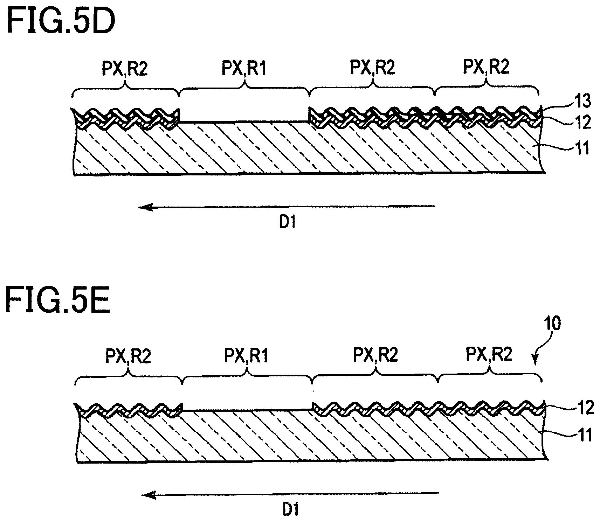

Next, while the light transmission layer 11 is being conveyed in the first direction D1, the etching agent is brought into contact with the second layer 13. According to the etching agent, the second layer 13 exhibits higher etching resistance than the first layer 12. As an example, the following describes a case where the light transmission layer 11 is caused to pass through an etching solution. Thus, as shown in Fig. 5D, a portion of a lamination structure of the first layer 12 and the second layer 13 which is located on the first region R1 is selectively removed.

Subsequently, as shown in Fig. 5E, the second layer 13 is removed. The second layer 13 is removable by etching. According to an etching agent which is used for the etching, the first layer 12 exhibits higher etching resistance than the second layer 13.

Then, the structure thus obtained is cut to an appropriate size as needed.
In this manner, the display member 10 is obtained.

Next, a second embodiment of the present invention is described. The second embodiment is an embodiment obtained by further specifying one of the embodiments that are described without referring to the drawings.

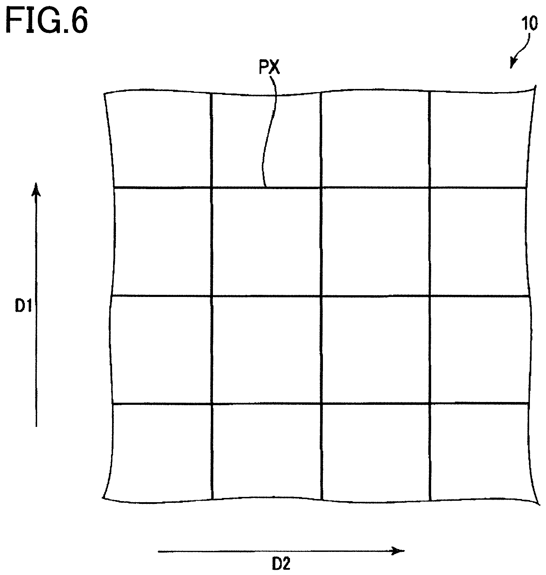

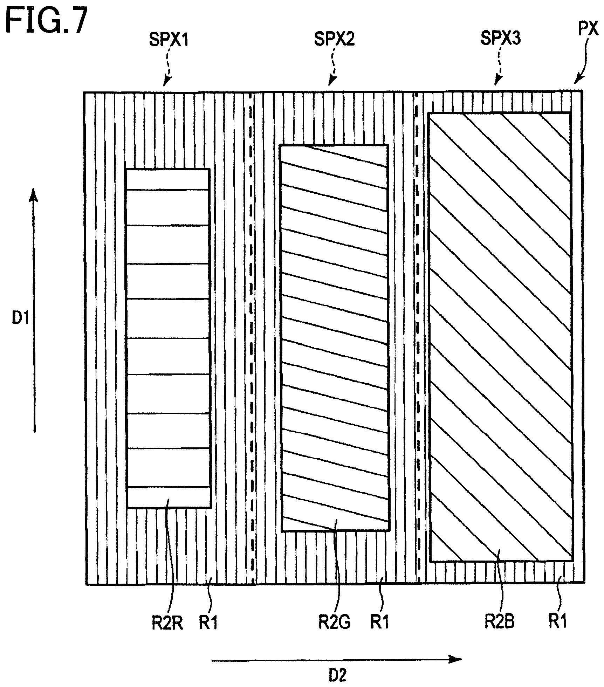

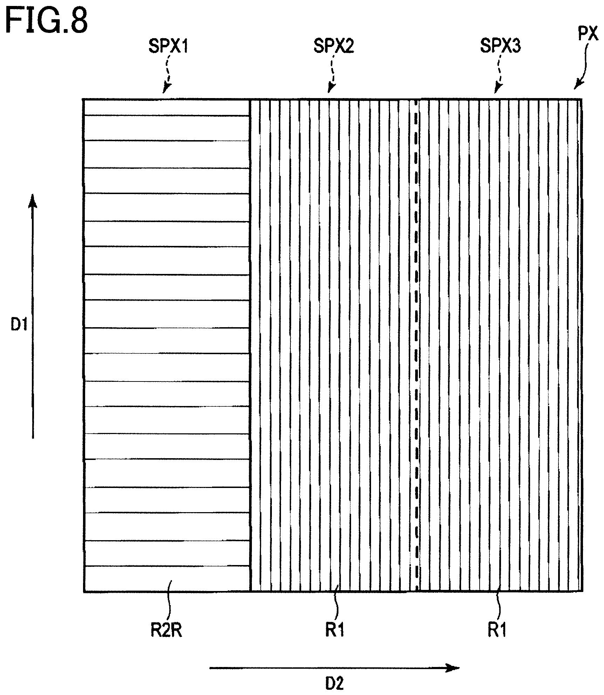

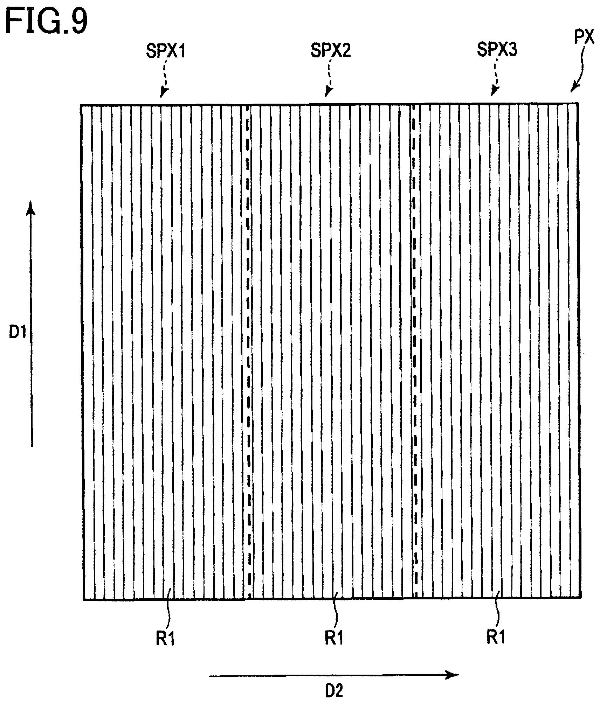

Fig. 6 is a plan view schematically showing the display member in accordance with the second embodiment of the present invention. Fig. 7 is a plan view schematically showing an example of a pixel which is included in the display member shown in Fig. 6. Fig. 8 is a plan view schematically showing another example of the pixel which is included in the display member shown in Fig. 6. Fig. 9 is a plan view schematically showing still another example of the pixel which is included in the display member shown in Fig. 6.

The display member 10 shown in Fig. 6 is the same as the display member 10 in accordance with the first embodiment except that the following structure is adopted for the display member 10 shown in Fig. 6.

That is, in the display member 10 shown in Fig. 6, as shown in Figs. 7 to 9, each of the pixels PX includes a first subpixel SPX1, a second subpixel SPX2, and a third subpixel SPX3.

The first subpixel SPX1 includes at least one of the first region R1 and a region R2R which is the second region. The distance between centers of the second grooves or ridges in the region R2R is, for example, in a range of 860 nm to 880 nm. In the region R2R, a diffraction grating for displaying a red color is formed on the interface between the light transmission layer 11 and the metal layer 12 or on the surface of the metal layer 12.

The second subpixel SPX2 includes at least one of the first region R1 and a region R2G which is the second region. The distance between centers of the second grooves or ridges in the region R2G is, for example, in a range of 755 nm to 775 nm. In the region R2G, a diffraction grating for displaying a green color is formed on the interface between the light transmission layer 11 and the metal layer 12 or on the surface of the metal layer 12.

The third subpixel SPX3 includes at least one of the first region R1 and a region R2B which is the second region. The distance between centers of the second grooves or ridges in the region R2B is, for example, in a range of 735 nm to 755 nm. In the region R2B, a diffraction grating for displaying a blue color is formed on the interface between the light transmission layer 11 and the metal layer 12 or on the surface of the metal layer 12.

One or more of the pixels PX include the first region R1. One or more of the pixels PX include at least one of the second region R2 and a third region R3. Each of two or more of the pixels PX has a different percentage of an area of the first region R1 in an area of a corresponding one of the pixels PX. Each of two or more of the pixels PX has a different percentage of an area of the region R2R, R2G, or R2B in an area of a corresponding one of the pixels PX.

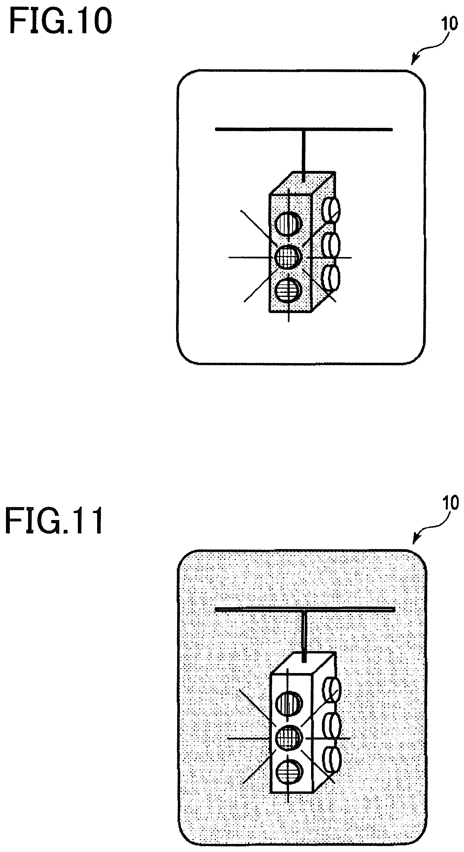

Fig. 10 is a plan view schematically showing an example of a state where the display member shown in Fig. 6 displays the second image. Fig. 11 is a plan view schematically showing an example of a state where the display member shown in Fig. 6 displays the first image.

When the display member 10 is illuminated with white light and transmitted light is observed, the display member 10 displays the first image corresponding to distribution of the first region R1, for example, as shown in Fig. 11. When the display member 10 is illuminated with white light and diffracted light which exits the diffraction structure is observed, the display member 10 displays a color image as the second image, for example, as shown in Fig. 10. A negative image of the first image is equal to a monochrome image of the second image. Thus, the display member 10 allows brightness inversion and multicoloration (or coloration) or monocoloration (or decoloration) to simultaneously occur without a change in shape of the image, when the display image is switched between the first image and the second image.

Next, a third embodiment of the present invention is described. The third embodiment is an embodiment obtained by further specifying one of the embodiments described without referring to the drawings.

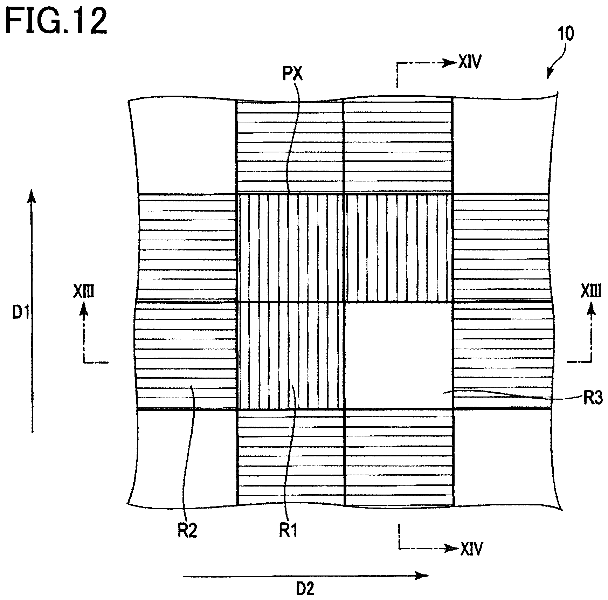

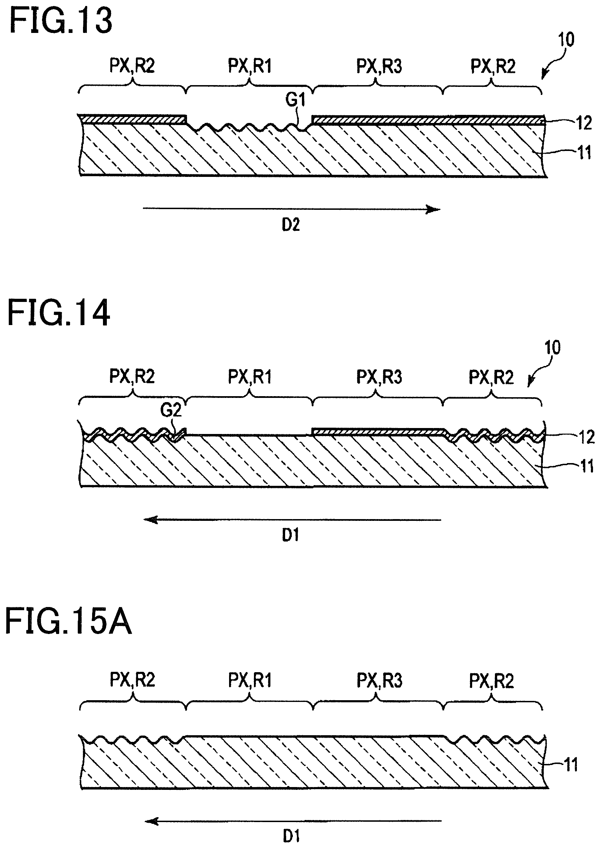

Fig. 12 is a plan view schematically showing the display member in accordance with the third embodiment of the present invention. Fig. 13 is a cross-sectional view taken along line XIII-XIII for the display member shown in Fig. 12. Fig. 14 is a cross-sectional view taken along line XIV-XIV for the display member shown in Fig. 12.

The display member 10 shown in Figs. 12 to 14 is the same as the display member 10 in accordance with the first embodiment except that the following structure is adopted for the display member 10 shown in Figs. 12 to 14.

That is, in the display member 10 shown in Figs 12 to 14, each of the pixels PX includes one of the first region R1, the second region R2, and the third region R3. One or more of the pixels PX include the first region R1. One or more of the pixels PX include the second region R2. One or more of the pixels PX include the third region R3.

As shown in Figs. 13 and 14, the third region R3 has a flat surface. The third region R3 is covered with a reflection layer 12.

When the display member 10 is illuminated with white light and transmitted light is observed, the display member 10 displays the first image corresponding to distribution of the first region R1. When the display member 10 is illuminated with white light and diffracted light which exits the diffraction structure is observed, the display member 10 displays the second image. A negative image of the first image differs from a monochrome image of the second image. Thus, the display member 10 allows a change in shape of the image and coloration or decoloration to simultaneously occur, when the display image is switched between the first image and the second image.

Figs. 15A to 15E are each a cross-sectional view schematically showing an example of a method for producing the display member shown in Figs. 12 to 14.

In the method, first, the light transmission layer 11 shown in Fig. 15A is prepared. The pixels PX each of which includes one of the first region R1, the second region R2, and the third region R3 are provided on the principal surface of the light transmission layer 11.

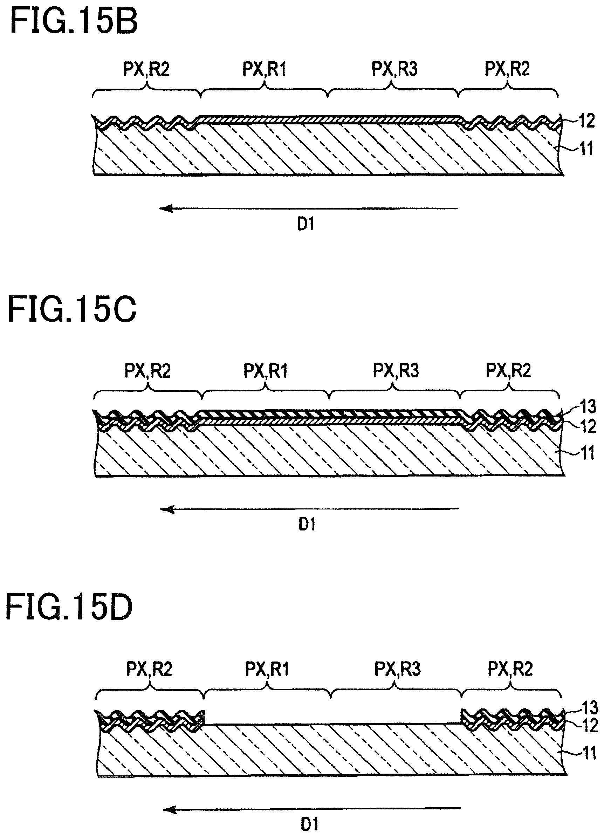

Next, while the light transmission layer 11 is being conveyed in the first direction D1, as shown in Fig. 15B, the metal layer 12 is formed as the first layer on the principal surface. The metal layer 12 is preferably formed by the vapor phase deposition method, and more preferably by a vacuum deposition method. The metal layer 12 is formed so that a surface of the metal layer 12 has a relief structure similar to a relief structure provided on the principal surface. As an example, the following describes a case where the metal layer 12 made of aluminum is formed by a vacuum deposition method.

Next, while the light transmission layer 11 is being conveyed in the first direction D1, as shown in Fig. 15C, the second layer 13 is formed on the metal layer 12. The second layer 13 is formed by the vapor phase deposition method, and preferably by the vacuum deposition method. The second layer 13 is formed so that permeability to an etching agent in a position of the first region R1 is higher than permeability to the etching agent in the second region R2 and the third region R3. As an example, the following describes a case where the second layer 13 made of silicon oxide is formed by the vacuum deposition method. Furthermore, as an example, the following describes a case where, in a portion located on the first region R1, the second layer 13 is a layer which is composed of a plurality of columnar bodies tilted in a single direction or a layer having a cavity and, in portions located on the second region R2 and the third region R3, the second layer 13 is a continuous film.

Next, while the light transmission layer 11 is being conveyed in the first direction D1, the etching agent is brought into contact with the second layer 13. According to the etching agent, the second layer 13 exhibits higher etching resistance than the first layer 12. As an example, the following describes a case where the light transmission layer 11 is caused to pass through an etching solution. Thus, as shown in Fig. 15D, a portion of a lamination structure of the first layer 12 and the second layer 13 which portion is located on the first region R1 is selectively removed.

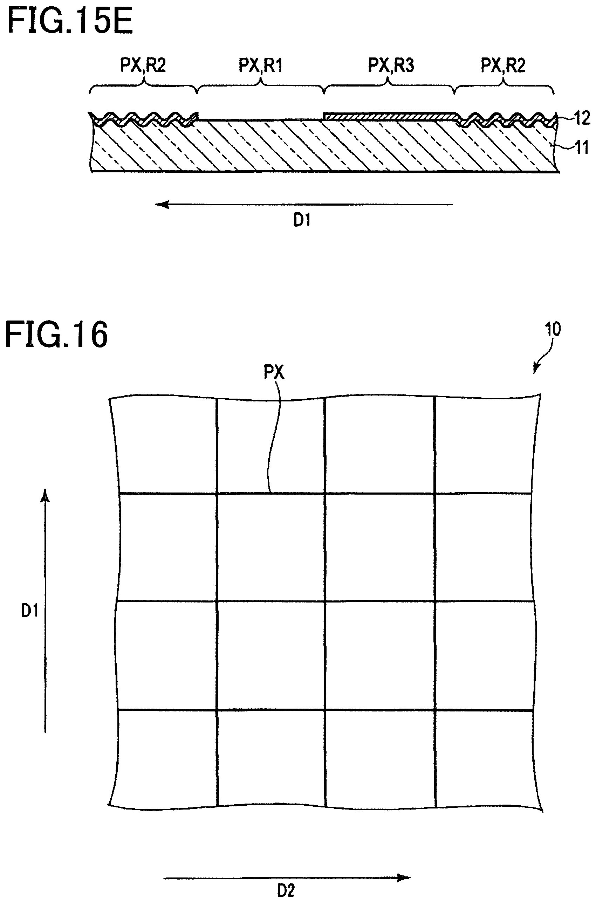

Subsequently, as shown in Fig. 15E, the second layer 13 is removed. The second layer 13 is removable by etching. According to an etching agent which is used for the etching, the first layer 12 exhibits higher etching resistance than the second layer 13.

Then, the structure thus obtained is cut to an appropriate size as needed. In this manner, the display member 10 is obtained.

Next, a fourth embodiment of the present invention is described. The fourth embodiment is an embodiment obtained by further specifying one of the embodiments that are described without referring to the drawings.

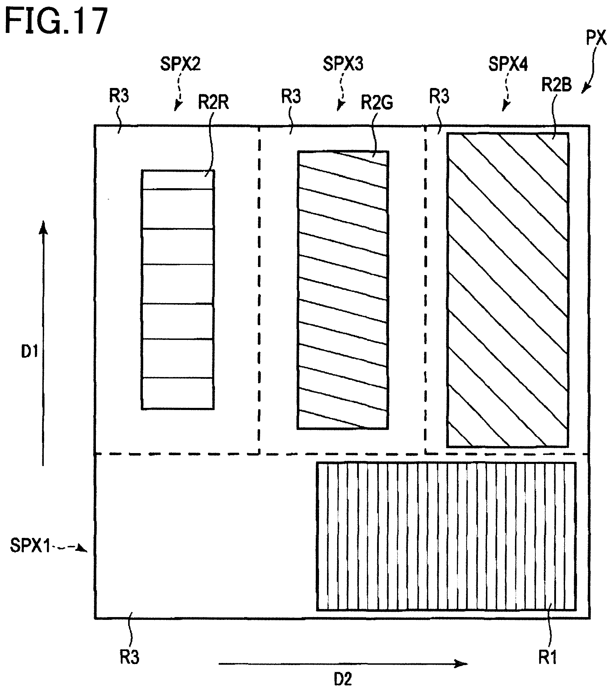

Fig. 16 is a plan view schematically showing the display member in accordance with the fourth embodiment of the present invention. Fig. 17 is a plan view schematically showing an example of a pixel which is included in the display member shown in Fig. 16.

The display member 10 shown in Fig. 16 is the same as the display member 10 in accordance with the first embodiment except that the following structure is adopted for the display member 10 shown in Fig. 16.

That is, in the display member 10 shown in Fig. 16, as shown in Fig. 17, each of the pixels PX includes the first subpixel SPX1, the second subpixel SPX2, the third subpixel SPX3, and a fourth subpixel PX4.

The first subpixel SPX1 includes at least one of the first region R1 and the third region R3. The first subpixel SPX1 is for displaying the first image.

The second subpixel SPX2 includes at least one of the region R2G which is the second region and the third region R3. The distance between centers of the second grooves or ridges in the region R2R is, for example, in a range of 860 nm to 880 nm. In the region R2R, a diffraction grating for displaying a red color is formed on the interface between the light transmission layer 11 and the metal layer 12 or on the surface of the metal layer 12.

The third subpixel SPX3 includes at least one of the region R2G which is the second region and the third region R3. The distance between centers of the second grooves or ridges in the region R2G is, for example, in a range of 755 nm to 775 nm. In the region R2G, a diffraction grating for displaying a green color is formed on the interface between the light transmission layer 11 and the metal layer 12 or on the surface of the metal layer 12.

The fourth subpixel SPX4 includes at least one of the region R2B which is the second region and the third region R3. The distance between centers of the second grooves or ridges in the region R2B is, for example, in a range of 735 nm to 755 nm. In the region R2B, a diffraction grating for displaying a blue color is formed on the interface between the light transmission layer 11 and the metal layer 12 or on the surface of the metal layer 12.

One or more of the pixels PX include the first region R1. One or more of the pixels PX include at least one of the second region R2, the third region R3, and a fourth region R4. Each of two or more of the pixels PX has a different percentage of an area of the first region R1 in an area of a corresponding one of the pixels PX. Each of two or more of the pixels PX has a different percentage of an area of the region R2R, R2G, or R2B in an area of a corresponding one of the pixels PX. Each of two or more of the pixels PX has a different percentage of an area of the second region R2, the third region R3, or the fourth region R4 in an area of a corresponding one of the pixels PX.

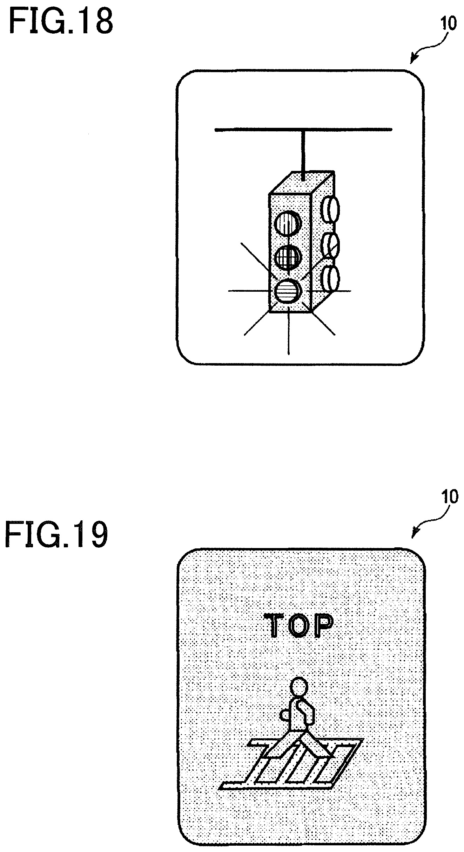

Fig. 18 is a plan view schematically showing an example of a state where the display member shown in Fig. 16 displays the second image. Fig. 19 is a plan view schematically showing an example of a state where the display member shown in Fig. 16 displays the first image.

When the display member 10 is illuminated with white light and transmitted light is observed, the display member 10 displays the first image corresponding to distribution of the first region R1, for example, as shown in Fig. 18. When the display member 10 is illuminated with white light and diffracted light which exits the diffraction structure is observed, the display member 10 displays a color image as the second image, for example, as shown in Fig. 19. A negative image of the first image differs from a monochrome image of the second image. Thus, the display member 10 allows a change in shape of the image and multicoloration (or coloration) or monocoloration (or decoloration) to simultaneously occur, when the display image is switched between the first image and the second image.

In each of the display members 10 in accordance with the third and fourth embodiments, one or more of the pixels PX can include the fourth region instead of the third region R3. Alternatively, in each of the display members 10 in accordance with the third and fourth embodiments, one or more of the pixels PX can further include the fourth region.

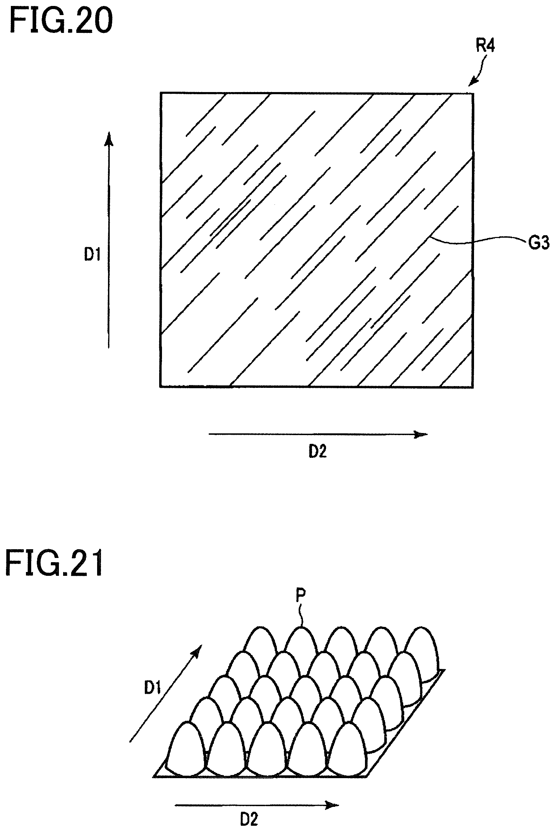

Fig. 20 is a plan view schematically showing an example of a structure which is adoptable for the fourth region. The fourth region R4 shown in Fig. 20 has a plurality of third grooves G3 each of which extends in a longitudinal direction in the second angle range AR2 described with reference to Fig. 4. The third grooves G3 form an anisotropic light-scattering structure on the interface between the light transmission layer 11 and the metal layer 12 or on the surface of the metal layer 12 shown in Figs. 13, 14, and the like.

Although Fig. 20 shows the structure having the third grooves G3, the fourth region R4, instead of the plurality of third grooves G3, can have a plurality of third ridges each of which extends in a longitudinal direction in the second angle range. Alternatively, the fourth region R4 can have the plurality of third ridges in addition to the plurality of third grooves G3.

In each of the display members in accordance with the first to fourth embodiments, the second region R2 has no grooves which intersect with the second grooves G2. The second region R2 can further have a groove which intersects with the second grooves G2.

Fig. 21 is a perspective view schematically showing another example of a structure which is adoptable for the second region.

The structure shown in Fig. 21 has a plurality of grooves each of which extends in a longitudinal direction parallel to the second direction D2 and a plurality of grooves each of which extends in a longitudinal direction parallel to the first direction D1. A plurality of convex portions P which intersect with these grooves and are arranged in the first direction D1 and the second direction D2 are formed.

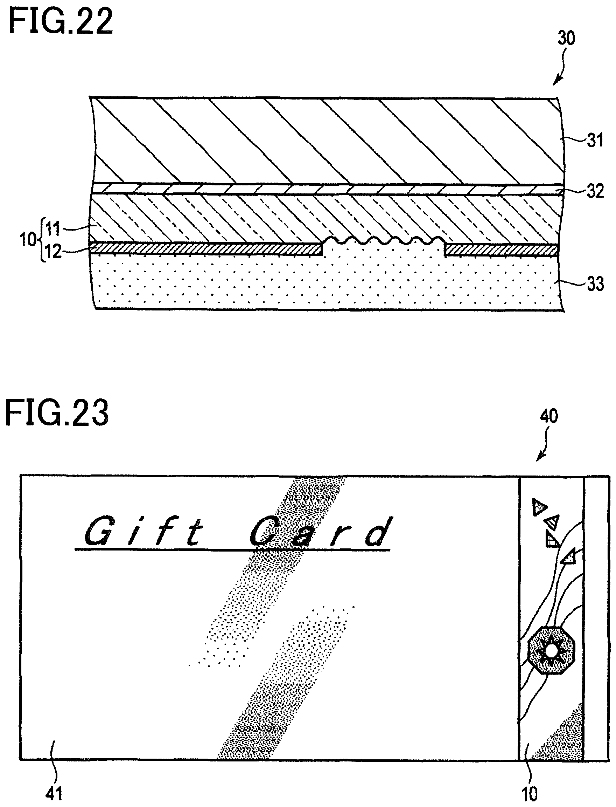

Fig. 22 is a cross-sectional view schematically showing a transfer foil in accordance with an embodiment of the present invention.

A transfer foil 30 shown in Fig. 22 includes a support 31, a peeling layer 32, the display member 10, and an adhesive layer 33. The peeling layer 32 is formed on a principal surface of the support 31. The display member 10 is supported by the support 31 so that the light transmission layer 11 of the display member 10 is in contact with the peeling layer 32 and the display member 10 is peelable. The adhesive layer 33 covers a surface of the display member 10 on the metal layer 12 side.

Fig. 23 is a plan view schematically showing a labeled article in accordance with an embodiment of the present invention.

A labeled article 40 shown in Fig. 23 is a gift certificate. The labeled article 40 includes a base material 41 which is composed of a print layer provided on paper and the display member 10 which is supported by the base material 41.

The following description discusses examples of the present invention.

### (Example 1)

First, lithography data for enabling display of the first and second images described with reference to Figs. 11 and 10, respectively, was created. The structure described with reference to Figs. 6 to 9 was adopted for the pixels. The longitudinal directions of the first grooves were parallel to the first direction, and the first grooves had a spatial frequency of 2000 grooves/mm. The longitudinal directions of the second groove were parallel to the second direction.

Next, the lithography data was used to perform electron beam lithography with respect to a resist layer. The resist layer was developed to form a relief structure. Next, sputtering was performed with respect to the relief structure to form a nickel layer, and subsequently, electroforming with nickel was performed with respect to the nickel layer. Thus, an original plate made of nickel was created. Next, the original plate was used to create a reproduction plate made of nickel.

Next, a peeling layer which had a thickness of 1 µm and was made of acrylic resin and an ultraviolet curing resin layer which had a thickness of 1 µm were successively formed by a gravure coating method on a polyethylene terephthalate (PET) film which had a thickness of 19 µm. Thus, a lamination film was obtained.

Next, the ultraviolet curing resin layer of the lamination film was heated while the reproduction plate was being pressed against the ultraviolet curing resin layer. Specifically, a pressure of 1 MPa was applied to the ultraviolet curing resin layer while the ultraviolet curing resin layer was being heated to 100°C. In this state, the ultraviolet curing resin layer was cured by irradiation with ultraviolet light. In this manner, a light transmission layer made of cured ultraviolet curing resin was formed.

Next, first and second layers were successively formed on the light transmission layer, and subsequently, etching was performed. The series of processes were performed at a lamination film conveying speed of 100 m/minute.

Specifically, first, a first layer which was made of aluminum and had a thickness of 50 nm was formed on the light transmission layer by the vacuum deposition method.

Next, a second layer which was made of silicon oxide and had a thickness of 20 nm was formed on the first layer by the vacuum deposition method. The formation of the second layer was performed on a roll having a diameter of 600 mm. When the formation of the second layer was performed, a distance from an evaporation source to the roll was set to 1 m.

Then, the lamination film was caused to pass through an etching solution.
As the etching solution, an aqueous sodium hydroxide solution containing sodium hydroxide at a mass concentration of 1.5% was used. A temperature of the etching solution was 45°C, and immersion time was 1 minute.

In this manner, a lamination structure which included a support made of PET, the peeling layer made of acrylic resin, and a display member was obtained.

Next, onto the display member, an adhesive made of acrylic-based resin was applied by a gravure coating method to form an adhesive layer having a thickness of 2 µm. In this manner, a transfer foil was obtained.

The transfer foil thus obtained was used to transfer the display member from the support to an object to which the display member was to be transferred. As the object, light transmissive transfer paper was used. The transfer was performed in such a manner that a stamper heated to 150°C was pressed at a pressure of 10 MPa against the transfer foil on the transfer paper, and then the stamper was removed, and the support was peeled from the display member.

A labeled article thus obtained was illuminated with white light and diffracted light was observed. As a result, a full-color hologram image having photographic quality was able to be observed. Subsequently, a back surface of the labeled article was illuminated with white light and transmitted light was observed. As a result, a watermark image corresponding to the distribution of the first region was able to be observed. That is, the change in image described with reference to Figs. 10 and 11 was able to be observed.

### (Example 2)

First, lithography data for enabling display of the first and second images described with reference to Figs. 19 and 18, respectively, was created. The structure described with reference to Figs. 16 and 17 was adopted for the pixels. The longitudinal directions of the first grooves were parallel to the first direction, and the first grooves had a spatial frequency of 2000 grooves/mm. The longitudinal directions of the second groove were parallel to the second direction.

Next, the lithography data was used to perform electron beam lithography with respect to a resist layer. The resist layer was developed to form a relief structure. Next, sputtering was performed with respect to the relief structure to form a nickel layer, and subsequently, electroforming with nickel was performed with respect to the nickel layer. Thus, an original plate made of nickel was created. Next, the original plate was used to create a reproduction plate made of nickel.

Except that the reproduction plate thus created was used, a transfer foil was produced by a method similar to the method used in Example 1. Except that this transfer foil was used, creation of a labeled article and observation of an image were performed by a method similar to the method used in Example 1.

As a result, when the labeled article was illuminated with white light and diffracted light was observed, a full-color hologram image having photographic quality was able to be observed. When a back surface of the labeled article was illuminated with white light and transmitted light was observed, an image having a shape different from that of the previous hologram image was able to be observed. That is, the change in image described with reference to Figs. 18 and 19 was able to be observed.

## Claims

1. A display member (10) comprising:
a light transmission layer (11) which has a principal surface on which a plurality of pixels (PX) are two-dimensionally arranged; and
a metal layer (12) which partially covers the principal surface,
each of the plurality of pixels (PX) including one or more selected from the group consisting of:
a first region (R1) which has a plurality of first grooves (G1) or ridges each of which extends in a longitudinal direction in a first angle range of -10° to +10° with respect to a first direction (D1) which is parallel to the principal surface, and which has no grooves or ridges which extend in a longitudinal direction outside the first angle range;
a second region (R2) which has a plurality of second grooves (G2) or ridges each of which extends in a longitudinal direction in a second angle range of -65° to +65° with respect to a second direction (D2) which is parallel to the principal surface and is perpendicular to the first direction (D1), the plurality of second grooves (G2) or ridges forming a diffraction structure on an interface between the light transmission layer (11) and the metal layer (12) or on a surface of the metal layer (12);
a third region (R3) which is flat; and
a fourth region (R4) which has a plurality of third grooves (G3) or ridges each of which extends in a longitudinal direction in the second angle range, the plurality of third grooves (G3) or ridges forming an anisotropic light-scattering structure on the interface between the light transmission layer (11) and the metal layer (12) or on the surface of the metal layer (12),
one or more of the plurality of pixels (PX) including the first region (R1),
one or more of the plurality of pixels (PX) including the second region (R2),
the metal layer (12) not covering at least part of the first region (R1) and covering the second region (R2), and also covering the third region (R3) and the fourth region (R4) when the third region (R3) and the fourth region (R4) are present,
the display member (10) being configured to display a first image corresponding to a distribution of the first region when the display member (10) is illuminated with white light and transmitted light is observed and display a second image when the display member is illuminated with white light and diffracted light which exits the diffraction structure is observed.

2. The display member (10) as set forth in claim 1, wherein:
one or more of the plurality of pixels (PX) include at least one of the third region (R3) and the fourth region (R4); and
the remaining one or more of the plurality of pixels (PX) include neither the third region (R3) nor the fourth region (R4).

3. The display member (10) as set forth in claim 1 or 2, wherein:
two or more of the plurality of pixels (PX) include the first region (R1); and
each of the two or more of the plurality of pixels (PX) has a different percentage of an area of the first region (R1) in an area of a corresponding one of the two or more of the plurality of pixels (PX).

4. The display member (10) as set forth in any one of claims 1 to 3, wherein:
two or more of the plurality of pixels (PX) include the first region (R1), at least one of the third region (R3) and the fourth region (R4), and optionally, the second region (R4);
each of the two or more of the plurality of pixels (PX) has a different percentage of an area of the first region (R1) in an area of a corresponding one of the two or more of the plurality of pixels (PX); and
each of the two or more of the plurality of pixels (PX) has a different percentage of a total area of the third region (R3) and the fourth region (R4) in an area of a corresponding one of the two or more of the plurality of pixels (PX).

5. The display member (10) as set forth in any one of claims 1 to 4, wherein:
two or more of the plurality of pixels (PX) include the second region (R2); and
each of the two or more of the plurality of pixels (PX) has a different percentage of an area of the second region (R2) in an area of a corresponding one of the two or more of the plurality of pixels (PX).

6. The display member as set forth in any one of claims 1 to 5, wherein:
two or more of the plurality of pixels (PX) include the second region (R2), at least one of the third region (R3) and the fourth region (R4), and optionally, the first region (R1);
each of the two or more of the plurality of pixels (PX) has a different percentage of an area of the second region (R2) in an area of a corresponding one of the two or more of the plurality of pixels (PX); and
each of the two or more of the plurality of pixels (PX) has a different percentage of a total area of the third region (R3) and the fourth region (R4) in an area of a corresponding one of the two or more of the plurality of pixels (PX).

7. The display member (10) as set forth in any one of claims 1 to 6, wherein:
a negative image of the first image is equal to a monochrome image of the second image.

8. The display member (10) as set forth in any one of claims 1 to 6, wherein:
a negative image of the first image differs from a monochrome image of the second image.

9. The display member (10) as set forth in any one of claims 1 to 8, wherein:
one or more of the plurality of pixels (PX) include the third region (R3);
one or more of the plurality of pixels (PX) include the fourth region (R4); and
a third pattern which is formed by an array of the one or more of the plurality of pixels (PX) including the third region (R3) differs from a fourth pattern which is formed by an array of the one or more of the plurality of pixels (PX) including the fourth region (R4).

10. The display member (10) as set forth in any one of claims 1 to 9, wherein:
each of the plurality of pixels (PX) includes first to third subpixels (SPX1, SPX2, SPX3);
each of the first to third subpixels (SPX1, SPX2, SPX3) includes one or more of the first to fourth regions (R1, R2, R3, R4);
in one or more of the plurality of pixels (PX), the first subpixel (SPX1) includes the second region (R2);
in one or more of the plurality of pixels (PX), the second subpixel (SPX2) includes the second region (R2);
in one or more of the plurality of pixels (PX), the third subpixel (SPX3) includes the second region (R2);
in each of the one or more of the plurality of pixels (PX) in which the first subpixel (SPX1) includes the second region (R2), under a condition where the display member (10) is illuminated with white light and diffracted light is observed, red diffracted light exits a portion of the diffraction structure which is located on the first subpixel (SPX1);
in each of the one or more of the plurality of pixels (PX) in which the second subpixel (SPX2) includes the second region (R2), under the condition, green diffracted light exits a portion of the diffraction structure which is located on the second subpixel (SPX2); and
in each of the one or more of the plurality of pixels (PX) in which the third subpixel (SPX3) includes the second region (R2), under the condition, blue diffracted light exits a portion of the diffraction structure which is located on the third subpixel (SPX3).

11. The display member (10) as set forth in any one of claims 1 to 9, wherein:
each of the plurality of pixels includes a first subpixel (SPX1) and a second subpixel (SPX2);
in one or more of the plurality of pixels (PX), the first subpixel (SPX1) includes the first region (R1), and optionally, at least one of the third region (R3) and the fourth region (R4), and in the remaining one or more of the plurality of pixels (PX), the first subpixel (SPX1) includes at least one of the third region (R3) and the fourth region (R4), and optionally, the first region (R1); and
in one or more of the plurality of pixels (PX), the second subpixel (SPX2) includes the second region (R2), and optionally, at least one of the third region (R3) and the fourth region (R4), and in the remaining one or more of the plurality of pixels (PX), the second subpixel (SPX2) includes at least one of the third region (R3) and the fourth region (R4), and optionally, the second region (R2).

12. The display member (10) as set forth in any one of claims 1 to 9, wherein:
each of the plurality of pixels (PX) includes first to fourth subpixels (SPX1, SPX2, SPX3, SPX4);
the first subpixel (SPX1) includes at least one of the first region (R1), the third region (R3), and the fourth region (R4);
each of the second to fourth subpixels (SPX2, SPX3, SPX4) includes at least one of the second to fourth regions (R2, R3, R4);
in one or more of the plurality of pixels (PX), the second subpixel (SPX2) includes the second region (R2);
in one or more of the plurality of pixels (PX), the third subpixel (SPX3) includes the second region (R2);
in one or more of the plurality of pixels (PX), the fourth subpixel (SPX4) includes the second region (R2);
in each of the one or more of the plurality of pixels (PX) in which the second subpixel (SPX2) includes the second region (R2), under a condition where the display member (10) is illuminated with white light and diffracted light is observed, red diffracted light exits a portion of the diffraction structure which is located on the second subpixel (SPX2);
in each of the one or more of the plurality of pixels (PX) in which the third subpixel (SPX3) includes the second region (R2), under the condition, green diffracted light exits a portion of the diffraction structure which is located on the third subpixel (SPX3); and
in each of the one or more of the plurality of pixels (PX) in which the fourth subpixel (SPX4) includes the second region (R2), under the condition, blue diffracted light exits a portion of the diffraction structure which is located on the fourth subpixel (SPX4).

13. A transfer foil (30) comprising:
the display member (10) recited in any one of claims 1 to 12; and
a support (31) which supports the display member (10) so that the display member is peelable.

14. A labeled article (40) comprising:
the display member (10) recited in any one of claims 1 to 12; and
an article (41) which supports the display member (10).

15. A method for producing a display member (10),
the method comprising the steps of:
preparing a light transmission layer which has a principal surface on which a plurality of pixels (PX) are two-dimensionally arranged,
each of the plurality of pixels (PX) including one or more selected from the group consisting of:
a first region (R1) which has a plurality of first grooves (G1) or ridges each of which extends in a longitudinal direction in a first angle range of -10° to +10° with respect to a first direction (D1) which is parallel to the principal surface, and which has no grooves or ridges which extend in a longitudinal direction outside the first angle range;
a second region (R2) which has a plurality of second grooves (G2) or ridges each of which extends in a longitudinal direction in a second angle range of -65° to +65° with respect to a second direction (D2) which is parallel to the principal surface and is perpendicular to the first direction (D1), the plurality of second grooves or ridges being arranged to form a diffraction structure;
a third region (R3) which is flat; and
a fourth region (R4) which has a plurality of third grooves (G3) or ridges each of which extends in a longitudinal direction in the second angle range, the plurality of third grooves (G3) or ridges being arranged to form an anisotropic light-scattering structure,
one or more of the plurality of pixels (PX) including the first region (R1), one or more of the plurality of pixels (PX) including the second region (R2);
forming a first layer as a metal layer (12) on the principal surface;
forming a second layer by depositing a material which is different from a material of the first layer on the first layer by a vapor phase deposition method while conveying the light transmission layer in the first direction (D1), permeability to an etching agent in a position of the first region (R1) being higher than permeability to the etching agent in the second to fourth regions (R2, R3, R4); and
selectively removing at least part of a portion of a lamination structure which is composed of the first layer and the second layer, by bringing the etching agent into contact with the second layer, the portion being located on the first region.

## Patentansprüche

1. Anzeigeelement (10), umfassend:
eine Lichtübertragungsschicht (11), die eine Hauptoberfläche aufweist, auf der eine Vielzahl von Pixeln (PX) zweidimensional angeordnet sind; und
eine Metallschicht (12), die die Hauptoberfläche teilweise bedeckt,
wobei jedes der Vielzahl von Pixeln (PX) eines oder mehrere einschließt, ausgewählt aus der Gruppe bestehend aus:
einer ersten Region (R1), die eine Vielzahl erster Rillen (G1) oder Stege aufweist, die sich jeweils in einer Längsrichtung in einem ersten Winkelbereich von -10° bis +10° in Bezug auf eine erste Richtung (D1) erstrecken, die parallel zur Hauptoberfläche ist, und die keine Rillen oder Stege aufweist, die sich in einer Längsrichtung außerhalb des ersten Winkelbereichs erstrecken;
einer zweiten Region (R2), die eine Vielzahl zweiter Rillen (G2) oder Stege aufweist, die sich jeweils in einer Längsrichtung in einem zweiten Winkelbereich von -65° bis +65° in Bezug auf eine zweite Richtung (D2) erstrecken, die parallel zur Hauptoberfläche und senkrecht zur ersten Richtung (D1) ist, wobei die Vielzahl zweiter Rillen (G2) oder Stege eine Beugungsstruktur an einer Schnittstelle zwischen der Lichtübertragungsschicht (11) und der Metallschicht (12) oder auf einer Oberfläche der Metallschicht (12) bildet;
einer dritten Region (R3), die flach ist; und
einer vierten Region (R4), die eine Vielzahl dritter Rillen (G3) oder Stege aufweist, die sich jeweils in einer Längsrichtung in dem zweiten Winkelbereich erstrecken, wobei die Vielzahl dritter Rillen (G3) oder Stege eine anisotrope Lichtstreuungsstruktur auf der Schnittstelle zwischen der Lichtübertragungsschicht (11) und der Metallschicht (12) oder auf der Oberfläche der Metallschicht (12) bildet,
wobei eines oder mehrere der Vielzahl von Pixeln (PX) die erste Region (R1) einschließt,
eines oder mehrere der Vielzahl von Pixeln (PX), die zweite Region (R2) einschließt,
die Metallschicht (12) mindestens einen Teil der ersten Region (R1) nicht bedeckt und die zweite Region (R2) bedeckt und auch die dritte Region (R3) und die vierte Region (R4) bedeckt, wenn die dritte Region (R3) und die vierte Region (R4) vorhanden sind,
das Anzeigeelement (10) ausgebildet ist, ein erstes Bild anzuzeigen, das einer Verteilung der ersten Region entspricht, wenn das Anzeigeelement (10) mit weißem Licht beleuchtet wird und übertragenes Licht beobachtet wird, und ein zweites Bild anzuzeigen, wenn das Anzeigeelement mit weißem Licht beleuchtet wird und gebeugtes Licht, das aus der Beugungsstruktur austritt, beobachtet wird.

2. Anzeigeelement (10) nach Anspruch 1, wobei:
eines oder mehrere der Vielzahl von Pixeln (PX) mindestens eine der dritten Region (R3) und der vierten Region (R4) einschließen; und
die übrigen des einen oder der mehreren der Vielzahl von Pixeln (PX) weder die dritte Region (R3) noch die vierte Region (R4) einschließen.

3. Anzeigeelement (10) nach Anspruch 1 oder 2, wobei:
zwei oder mehr der Vielzahl von Pixeln (PX), die erste Region (R1) einschließen; und
jedes der zwei oder mehr der Vielzahl von Pixeln (PX) einen anderen Prozentsatz einer Fläche der ersten Region (R1) in einer Fläche eines entsprechenden der zwei oder mehr der Vielzahl von Pixeln (PX) aufweist.

4. Anzeigeelement (10) nach einem der Ansprüche 1 bis 3, wobei:
zwei oder mehr der Vielzahl von Pixeln (PX), die erste Region (R1), mindestens eine der dritten Region (R3) und der vierten Region (R4) und optional die zweite Region (R4) einschließen;
jedes der zwei oder mehr der Vielzahl von Pixeln (PX) einen anderen Prozentsatz einer Fläche der ersten Region (R1) in einer Fläche eines entsprechenden der zwei oder mehr der Vielzahl von Pixeln (PX) aufweist; und
jedes der zwei oder mehr der Vielzahl von Pixeln (PX) einen anderen Prozentsatz einer Gesamtfläche der dritten Region (R3) und der vierten Region (R4) in einer Fläche eines entsprechenden der zwei oder mehr der Vielzahl von Pixeln (PX) aufweist.

5. Anzeigeelement (10) nach einem der Ansprüche 1 bis 4, wobei:
zwei oder mehr der Vielzahl von Pixeln (PX), die die zweite Region (R2) einschließen; und
jedes der zwei oder mehr der Vielzahl von Pixeln (PX) einen anderen Prozentsatz einer Fläche der zweiten Region (R2) in einer Fläche eines entsprechenden der zwei oder mehr der Vielzahl von Pixeln (PX) aufweist.

6. Anzeigeelement nach einem der Ansprüche 1 bis 5, wobei:
zwei oder mehr der Vielzahl von Pixeln (PX) die zweite Region (R2), mindestens eine von der dritten Region (R3) und der vierten Region (R4) und optional die erste Region (R1) einschließen;
jedes der zwei oder mehr der Vielzahl von Pixeln (PX) einen anderen Prozentsatz einer Fläche der zweiten Region (R2) in einer Fläche eines entsprechenden der zwei oder mehr der Vielzahl von Pixeln (PX) aufweist; und
jedes der zwei oder mehr der Vielzahl von Pixeln (PX) einen anderen Prozentsatz einer Gesamtfläche der dritten Region (R3) und der vierten Region (R4) in einer Fläche eines entsprechenden der zwei oder mehr der Vielzahl von Pixeln (PX) aufweist.

7. Anzeigeelement (10) nach einem der Ansprüche 1 bis 6, wobei:
ein negatives Bild des ersten Bildes gleich einem monochromen Bild des zweiten Bildes ist.

8. Anzeigeelement (10) nach einem der Ansprüche 1 bis 6, wobei:
ein negatives Bild des ersten Bildes sich von einem monochromen Bild des zweiten Bildes unterscheidet.

9. Anzeigeelement (10) nach einem der Ansprüche 1 bis 8, wobei:
eines oder mehr der Vielzahl von Pixeln (PX), die dritte Region (R3) einschließen;
eines oder mehr der Vielzahl von Pixeln (PX), die vierte Region (R4) einschließen; und
ein drittes Muster, das durch eine Anordnung des einen oder der mehreren der Vielzahl von Pixeln (PX) gebildet ist, die die dritte Region (R3) einschließen, sich von einem vierten Muster unterscheidet, das durch eine Anordnung des einen oder der mehreren der Vielzahl von Pixeln (PX) gebildet ist, die die vierte Region (R4) einschließen.

10. Anzeigeelement (10) nach einem der Ansprüche 1 bis 9, wobei:
jedes der Vielzahl von Pixeln (PX) erste bis dritte Subpixel (SPX1, SPX2, SPX3) einschließt;
jedes der ersten bis dritten Subpixel (SPX1, SPX2, SPX3) eine oder mehrere der ersten bis vierten Regionen (R1, R2, R3, R4) einschließt;
in einem oder mehreren der Vielzahl von Pixeln (PX) das erste Subpixel (SPX1) die zweite Region (R2) einschließt;
in einem oder mehreren der Vielzahl von Pixeln (PX) das zweite Subpixel (SPX2) die zweite Region (R2) einschließt;
in einem oder mehreren der Vielzahl von Pixeln (PX) das dritte Subpixel (SPX3) die zweite Region (R2) einschließt;
in jedem des einen oder der mehreren der Vielzahl von Pixeln (PX), in dem das erste Subpixel (SPX1) die zweite Region (R2) einschließt, unter einer Bedingung, dass das Anzeigeelement (10) mit weißem Licht beleuchtet ist und gebeugtes Licht beobachtet wird, rotes gebeugtes Licht aus einem Abschnitt der Beugungsstruktur austritt, der sich auf dem ersten Subpixel (SPX1) befindet;
in jedem des einen oder der mehreren der Vielzahl von Pixeln (PX), in dem das zweite Subpixel (SPX2) die zweite Region (R2) einschließt, unter der Bedingung, grünes gebeugtes Licht aus einem Abschnitt der Beugungsstruktur austritt, der sich auf dem zweiten Subpixel (SPX2) befindet; und
in jedem des einen oder der mehreren der Vielzahl von Pixeln (PX), in dem das dritte Subpixel (SPX3) die zweite Region (R2) einschließt, unter der Bedingung, blaues gebeugtes Licht aus einem Abschnitt der Beugungsstruktur austritt, der sich auf dem dritten Subpixel (SPX3) befindet.

11. Anzeigeelement (10) nach einem der Ansprüche 1 bis 9, wobei:
jedes der Vielzahl von Pixeln ein erstes Subpixel (SPX1) und ein zweites Subpixel (SPX2) einschließt;
in einem oder mehreren der Vielzahl von Pixeln (PX) das erste Subpixel (SPX1), die erste Region (R1) und optional mindestens eine der dritten Region (R3) und der vierten Region (R4) einschließt, und in den restlichen einen oder mehreren der Vielzahl von Pixeln (PX) das erste Subpixel (SPX1), mindestens eine der dritten Region (R3) und der vierten Region (R4) und optional die erste Region (R1) einschließt; und
in einem oder mehreren der Vielzahl von Pixeln (PX) das zweite Subpixel (SPX2) die zweite Region (R2) und optional mindestens eine der dritten Region (R3) und der vierten Region (R4) einschließt, und in den restlichen einen oder mehreren der Vielzahl von Pixeln (PX) das zweite Subpixel (SPX2) mindestens eine der dritten Region (R3) und der vierten Region (R4) und optional die zweite Region (R2) einschließt.

12. Anzeigeelement (10) nach einem der Ansprüche 1 bis 9, wobei:
jedes der Vielzahl von Pixeln (PX) erste bis vierte Subpixel (SPX1, SPX2, SPX3, SPX4) einschließt;
das erste Subpixel (SPX1) mindestens eine der ersten Region (R1), der dritten Region (R3) und der vierten Region (R4) einschließt;
jedes der zweiten bis vierten Subpixel (SPX2, SPX3, SPX4) mindestens eine der zweiten bis vierten Regionen (R2, R3, R4) einschließt;
in einem oder mehreren der Vielzahl von Pixeln (PX) das zweite Subpixel (SPX2) die zweite Region (R2) einschließt;
in einem oder mehreren der Vielzahl von Pixeln (PX) das dritte Subpixel (SPX3) die zweite Region (R2) einschließt;
in einem oder mehreren der Vielzahl von Pixeln (PX) das vierte Subpixel (SPX4) die zweite Region (R2) einschließt;
in jedem des einen oder der mehreren der Vielzahl von Pixeln (PX), in dem das zweite Subpixel (SPX2) die zweite Region (R2) einschließt, unter einer Bedingung, dass eine Beleuchtung des Anzeigeelements (10) mit weißem Licht und gebeugtem Licht beobachtet wird, rotes gebeugtes Licht aus einem Abschnitt der Beugungsstruktur austritt, der sich auf dem zweiten Subpixel (SPX2) befindet;
in jedem des einen oder der mehreren der Vielzahl von Pixeln (PX), in dem das dritte Subpixel (SPX3) die zweite Region (R2) einschließt, unter der Bedingung, dass grünes gebeugtes Licht aus einem Abschnitt der Beugungsstruktur austritt, der sich auf dem dritten Subpixel (SPX3) befindet, und
in jedem des einen oder der mehreren der Vielzahl von Pixeln (PX), in dem das vierte Subpixel (SPX4) die zweite Region (R2) einschließt, unter der Bedingung, blaues gebeugtes Licht aus einem Abschnitt der Beugungsstruktur austritt, der sich auf dem vierten Subpixel (SPX4) befindet.

13. Transferfolie (30), umfassend:
das Anzeigeelement (10) nach einem der Ansprüche 1 bis 12; und
einen Träger (31), der das Anzeigeelement (10) trägt, sodass das Anzeigeelement abgelöst werden kann.

14. Etikettierter Artikel (40), umfassend:
das Anzeigeelement (10) nach einem der Ansprüche 1 bis 12; und
einen Artikel (41), der das Anzeigeelement (10) trägt.

15. Verfahren zum Herstellen eines Anzeigeelements (10),
wobei das Verfahren die folgenden Schritte umfasst:
Vorbereiten einer Lichtübertragungsschicht, die eine Hauptoberfläche aufweist, auf der eine Vielzahl von Pixeln (PX) zweidimensional angeordnet sind,
wobei jedes der Vielzahl von Pixeln (PX) eines oder mehrere einschließt, ausgewählt aus der Gruppe bestehend aus:
einer ersten Region (R1), die eine Vielzahl erster Rillen (G1) oder Stege aufweist, die sich jeweils in einer Längsrichtung in einem ersten Winkelbereich von - 10° bis +10° in Bezug auf eine erste Richtung (D1) erstrecken, die parallel zur Hauptoberfläche ist, und die keine Rillen oder Stege aufweist, die sich in einer Längsrichtung außerhalb des ersten Winkelbereichs erstrecken;
einer zweiten Region (R2), die eine Vielzahl zweiter Rillen (G2) oder Stege aufweist, die sich jeweils in einer Längsrichtung in einem zweiten Winkelbereich von -65° bis +65° in Bezug auf eine zweite Richtung (D2) erstrecken, die parallel zur Hauptoberfläche und senkrecht zur ersten Richtung (D1) ist, wobei die Vielzahl zweiter Rillen oder Stege zur Bildung einer Beugungsstruktur angeordnet ist;
einer dritten Region (R3), die flach ist; und
einer vierten Region (R4), die eine Vielzahl dritter Rillen (G3) oder Stege aufweist, die sich jeweils in einer Längsrichtung in dem zweiten Winkelbereich erstrecken, wobei die Vielzahl dritter Rillen (G3) oder Stege zur Bildung einer anisotropen Lichtstreuungsstruktur angeordnet ist,
wobei eines oder mehrere der Vielzahl von Pixeln (PX) die erste Region (R1) einschließt, eines oder mehrere der Vielzahl von Pixeln (PX) die zweite Region (R2) einschließt,
Bilden einer ersten Schicht als eine Metallschicht (12) auf der Hauptoberfläche;
Bilden einer zweiten Schicht durch Abscheiden eines Materials, das sich von einem Material der ersten Schicht unterscheidet, auf der ersten Schicht durch ein Gasphasenabscheidungsverfahren, während die Lichtübertragungsschicht in der ersten Richtung (D1) bewegt wird, wobei eine Permeabilität gegenüber einem Ätzmittel in einer Position der ersten Region (R1) höher ist als eine Permeabilität gegenüber dem Ätzmittel in den zweiten bis vierten Regionen (R2, R3, R4); und
selektives Entfernen mindestens eines Teils eines Abschnitts einer Laminierungsstruktur, die aus der ersten Schicht und der zweiten Schicht besteht, indem das Ätzmittel mit der zweiten Schicht in Kontakt gebracht wird, wobei sich der Abschnitt auf der ersten Region befindet.

## Revendications

1. Élément d'affichage (10) comprenant :
une couche de transmission de lumière (11) qui présente une surface principale sur laquelle une pluralité de pixels (PX) sont agencés bidimensionnellement ; et
une couche métallique (12) qui recouvre partiellement la surface principale,
chacun des pixels de la pluralité de pixels (PX) incluant une ou plusieurs régions sélectionnées dans le groupe consistant en :
une première région (R1) qui présente une pluralité de premières rainures (G1) ou arêtes dont chacune s'étend dans une direction longitudinale dans une première plage d'angles de -10° à +10° par rapport à une première direction (D1) qui est parallèle à la surface principale, et qui ne présente aucune rainure ni arête qui s'étend dans une direction longitudinale en dehors de la première plage d'angles ;
une deuxième région (R2) qui présente une pluralité de deuxièmes rainures (G2) ou arêtes dont chacune s'étend dans une direction longitudinale dans une deuxième plage d'angles de -65° à +65° par rapport à une deuxième direction (D2) qui est parallèle à la surface principale et est perpendiculaire à la première direction (D1), la pluralité de deuxièmes rainures (G2) ou arêtes formant une structure de diffraction sur une interface entre la couche de transmission de lumière (11) et la couche métallique (12) ou sur une surface de la couche métallique (12) ;
une troisième région (R3) qui est plate ; et
une quatrième région (R4) qui présente une pluralité de troisièmes rainures (G3) ou arêtes dont chacune s'étend dans une direction longitudinale dans la deuxième plage d'angles, la pluralité de troisièmes rainures (G3) ou arêtes formant une structure de diffusion de lumière anisotrope sur l'interface entre la couche de transmission de lumière (11) et la couche métallique (12) ou sur la surface de la couche métallique (12),
un ou plusieurs pixels de la pluralité de pixels (PX) incluant la première région (R1),
un ou plusieurs pixels de la pluralité de pixels (PX) incluant la deuxième région (R2),
la couche métallique (12) ne recouvrant pas au moins une partie de la première région (R1) et recouvrant la deuxième région (R2), et recouvrant également la troisième région (R3) et la quatrième région (R4) lorsque la troisième région (R3) et la quatrième région (R4) sont présentes,
l'élément d'affichage (10) étant configuré pour afficher une première image correspondant à une distribution de la première région lorsque l'élément d'affichage (10) est éclairé avec une lumière blanche et que la lumière transmise est observée et afficher une deuxième image lorsque l'élément d'affichage est éclairé avec une lumière blanche et qu'une lumière diffractée qui sort de la structure de diffraction est observée.

2. Élément d'affichage (10) selon la revendication 1, dans lequel :
un ou plusieurs pixels de la pluralité de pixels (PX) incluent au moins l'une parmi la troisième région (R3) et la quatrième région (R4) ; et
le ou les pixels restants de la pluralité de pixels (PX) n'incluent ni la troisième région (R3) ni la quatrième région (R4).

3. Élément d'affichage (10) selon la revendication 1 ou la revendication 2, dans lequel :
deux ou plus de deux pixels de la pluralité de pixels (PX) incluent la première région (R1) ; et
chacun des deux ou plus de deux pixels de la pluralité de pixels (PX) présente un pourcentage différent d'une zone de la première région (R1) dans une zone d'un pixel correspondant des deux ou plus de deux pixels de la pluralité de pixels (PX).

4. Élément d'affichage (10) selon l'une quelconque des revendications 1 à 3, dans lequel :
deux ou plus de deux pixels de la pluralité de pixels (PX) incluent la première région (R1), au moins l'une de la troisième région (R3) et de la quatrième région (R4), et facultativement, la deuxième région (R4) ;
chacun des deux ou plus de deux pixels de la pluralité de pixels (PX) présente un pourcentage différent d'une zone de la première région (R1) dans une zone d'un pixel correspondant des deux ou plus de deux pixels de la pluralité de pixels (PX) ; et
chacun des deux ou plus de deux pixels de la pluralité de pixels (PX) présente un pourcentage différent d'une zone totale de la troisième région (R3) et de la quatrième région (R4) dans une zone d'un pixel correspondant des deux ou plus de deux pixels de la pluralité de pixels (PX).

5. Élément d'affichage (10) selon l'une quelconque des revendications 1 à 4, dans lequel :
deux ou plus de deux pixels de la pluralité de pixels (PX) incluent la deuxième région (R2) ; et
chacun des deux ou plus de deux pixels de la pluralité de pixels (PX) présente un pourcentage différent d'une zone de la deuxième région (R2) dans une zone d'un pixel correspondant des deux ou plus de deux pixels de la pluralité de pixels (PX).

6. Élément d'affichage selon l'une quelconque des revendications 1 à 5, dans lequel :
deux ou plus de deux pixels de la pluralité de pixels (PX) incluent la deuxième région (R2), au moins l'une de la troisième région (R3) et de la quatrième région (R4), et, facultativement, la première région (R1) ;
chacun des deux ou plus de deux pixels de la pluralité de pixels (PX) présente un pourcentage différent d'une zone de la deuxième région (R2) dans une zone d'un pixel correspondant des deux ou plus de deux pixels de la pluralité de pixels (PX) ; et
chacun des deux ou plus de deux pixels de la pluralité de pixels (PX) présente un pourcentage différent d'une zone totale de la troisième région (R3) et de la quatrième région (R4) dans une zone d'un pixel correspondant des deux ou plus de deux pixels la pluralité de pixels (PX).

7. Élément d'affichage (10) selon l'une quelconque des revendications 1 à 6, dans lequel :
une image négative de la première image est égale à une image monochrome de la deuxième image.

8. Élément d'affichage (10) selon l'une quelconque des revendications 1 à 6, dans lequel :
une image négative de la première image diffère d'une image monochrome de la deuxième image.

9. Élément d'affichage (10) selon l'une quelconque des revendications 1 à 8, dans lequel :
un ou plusieurs pixels de la pluralité de pixels (PX) incluent la troisième région (R3) ;
un ou plusieurs pixels de la pluralité de pixels (PX) incluent la quatrième région (R4) ; et
un troisième motif qui est formé par une matrice du ou des pixels de la pluralité de pixels (PX) incluant la troisième région (R3) diffère d'un quatrième motif qui est formé par une matrice du ou des pixels de la pluralité de pixels (PX) incluant la quatrième région (R4).

10. Élément d'affichage (10) selon l'une quelconque des revendications 1 à 9, dans lequel :
chacun des pixels de la pluralité de pixels (PX) inclut des premier à troisième sous-pixels (SPX1, SPX2, SPX3) ;
chacun des premier à troisième sous-pixels (SPX1, SPX2, SPX3) inclut une ou plusieurs des première à quatrième régions (R1, R2, R3, R4) ;
dans un ou plusieurs pixels de la pluralité de pixels (PX), le premier sous-pixel (SPX1) inclut la deuxième région (R2) ;
dans un ou plusieurs pixels de la pluralité de pixels (PX), le deuxième sous-pixel (SPX2) inclut la deuxième région (R2) ;
dans un ou plusieurs pixels de la pluralité de pixels (PX), le troisième sous-pixel (SPX3) inclut la deuxième région (R2) ;
dans chacun du ou des pixels de la pluralité de pixels (PX) dans lesquels le premier sous-pixel (SPX1) inclut la deuxième région (R2), dans une condition où l'élément d'affichage (10) est éclairé avec une lumière blanche et une lumière diffractée est observée, une lumière diffractée rouge sort d'une portion de la structure de diffraction qui est située sur le premier sous-pixel (SPX1) ;
dans chacun du ou des pixels de la pluralité de pixels (PX) dans lesquels le deuxième sous-pixel (SPX2) inclut la deuxième région (R2), dans la condition, une lumière diffractée verte sort d'une portion de la structure de diffraction qui est située sur le deuxième sous-pixel (SPX2) ; et
dans chacun du ou des pixels de la pluralité de pixels (PX) dans lesquels le troisième sous-pixel (SPX3) inclut la deuxième région (R2), dans la condition, une lumière diffractée bleue sort d'une portion de la structure de diffraction qui est située sur le troisième sous-pixel (SPX3).

11. Élément d'affichage (10) selon l'une quelconque des revendications 1 à 9, dans lequel :
chacun des pixels de la pluralité de pixels inclut un premier sous-pixel (SPX1) et un deuxième sous-pixel (SPX2) ;
dans un ou plusieurs pixels de la pluralité de pixels (PX), le premier sous-pixel (SPX1) inclut la première région (R1), et facultativement, au moins l'une de la troisième région (R3) et de la quatrième région (R4), et dans le ou les pixels restants de la pluralité de pixels (PX), le premier sous-pixel (SPX1) inclut au moins l'une de la troisième région (R3) et de la quatrième région (R4), et facultativement, la première région (R1) ; et
dans un ou plusieurs pixels de la pluralité de pixels (PX), le deuxième sous-pixel (SPX2) inclut la deuxième région (R2), et, facultativement, au moins l'une de la troisième région (R3) et de la quatrième région (R4), et dans le ou les pixels restants de la pluralité de pixels (PX), le deuxième sous-pixel (SPX2) inclut au moins l'une de la troisième région (R3) et de la quatrième région (R4), et, facultativement, la deuxième région (R2).

12. Élément d'affichage (10) selon l'une quelconque des revendications 1 à 9, dans lequel :
chacun des pixels de la pluralité de pixels (PX) inclut des premier à quatrième sous-pixels (SPX1, SPX2, SPX3, SPX4) ;
le premier sous-pixel (SPX1) inclut au moins une région de la première région (R1), la troisième région (R3) et la quatrième région (R4) ;
chacun des deuxième à quatrième sous-pixels (SPX2, SPX3, SPX4) inclut au moins une région des deuxième à quatrième régions (R2, R3, R4) ;
dans un ou plusieurs pixels de la pluralité de pixels (PX), le deuxième sous-pixel (SPX2) inclut la deuxième région (R2) ;
dans un ou plusieurs pixels de la pluralité de pixels (PX), le troisième sous-pixel (SPX3) inclut la deuxième région (R2) ;
dans un ou plusieurs pixels de la pluralité de pixels (PX), le quatrième sous-pixel (SPX4) inclut la deuxième région (R2) ;
dans chacun du ou des pixels de la pluralité de pixels (PX) dans lesquels le deuxième sous-pixel (SPX2) inclut la deuxième région (R2), dans une condition où l'élément d'affichage (10) est éclairé avec une lumière blanche et une lumière diffractée est observée, une lumière diffractée rouge sort d'une portion de la structure de diffraction qui est située sur le deuxième sous-pixel (SPX2) ;
dans chacun du ou des pixels de la pluralité de pixels (PX) dans lesquels le troisième sous-pixel (SPX3) inclut la deuxième région (R2), dans la condition, une lumière diffractée verte sort d'une portion de la structure de diffraction qui est située sur le troisième sous-pixel (SPX3) ; et
dans chacun du ou des pixels de la pluralité de pixels (PX) dans lesquels le quatrième sous-pixel (SPX4) inclut la deuxième région (R2), dans la condition, une lumière diffractée bleue sort d'une portion de la structure de diffraction qui est située sur le quatrième sous-pixel (SPX4).

13. Feuille de transfert (30) comprenant :
l'élément d'affichage (10) selon l'une quelconque des revendications 1 à 12 ; et
un support (31) qui supporte l'élément d'affichage (10) de sorte que l'élément d'affichage soit pelable.

14. Article étiqueté (40) comprenant :
l'élément d'affichage (10) selon l'une quelconque des revendications 1 à 12 ; et
un article (41) qui supporte l'élément d'affichage (10).

15. Procédé de production d'un élément d'affichage (10),
le procédé comprenant les étapes suivantes :
la préparation d'une couche de transmission de lumière qui présente une surface principale sur laquelle une pluralité de pixels (PX) sont agencés bidimensionnellement,
chacun des pixels de la pluralité de pixels (PX) incluant une ou plusieurs régions sélectionnées dans le groupe consistant en :
une première région (R1) qui présente une pluralité de premières rainures (G1) ou arêtes dont chacune s'étend dans une direction longitudinale dans une première plage d'angles de -10° à +10° par rapport à une première direction (D1) qui est parallèle à la surface principale, et qui ne présente aucune rainure ni arête qui s'étend dans une direction longitudinale en dehors de la première plage d'angles ;
une deuxième région (R2) qui présente une pluralité de deuxièmes rainures (G2) ou arêtes dont chacune s'étend dans une direction longitudinale dans une deuxième plage d'angles de -65° à +65° par rapport à une deuxième direction (D2) qui est parallèle à la surface principale et est perpendiculaire à la première direction (D1), la pluralité de deuxièmes rainures ou arêtes étant agencées pour former une structure de diffraction ;
une troisième région (R3) qui est plate ; et
une quatrième région (R4) qui présente une pluralité de troisièmes rainures (G3) ou arêtes dont chacune s'étend dans une direction longitudinale dans la deuxième plage d'angles, la pluralité de troisièmes rainures (G3) ou arêtes étant agencées pour former une structure anisotrope de diffusion de lumière,
un ou plusieurs pixels de la pluralité de pixels (PX) incluant la première région (R1), un ou plusieurs pixels de la pluralité de pixels (PX) incluant la deuxième région (R2) ;
la mise en forme d'une première couche en tant que couche métallique (12) sur la surface principale ;
la mise en forme d'une deuxième couche par le dépôt d'un matériau qui est différent d'un matériau de la première couche sur la première couche par un procédé de dépôt en phase vapeur tout en transportant la couche de transmission de lumière dans la première direction (D1), la perméabilité à un agent de gravure dans une position de la première région (R1) étant supérieure à la perméabilité à l'agent de gravure dans les deuxième à quatrième régions (R2, R3, R4) ; et
le retrait sélectif d'au moins une partie d'une portion d'une structure de stratification qui est composée de la première couche et de la deuxième couche, en mettant l'agent de gravure en contact avec la deuxième couche, la portion étant située sur la première région.
